# EUROPÄISCHE PATENTSCHRIFT

(11) **EP 3 938 201 B1**
(45) Veröffentlichungstag und Bekanntmachung des Hinweises auf die Patenterteilung: **19.03.2025**
(21) Anmeldenummer: 20706362.9
(22) Anmeldetag: 02.03.2020
(51) Int. Cl.: B32B 5/02, B32B 5/14, B32B 5/26, B32B 7/02, B32B 7/04, D04H 1/4258, D04H 3/013, E02D 17/00, E02D 17/20, E02D 19/00, E02D 31/00

(54) **GEOMATERIALBAHN MIT BIOLOGISCHEN ABBAUEIGENSCHAFTEN**
GEOMATERIAL STRIP WITH BIOLOGICAL DEGRADATION CHARACTERISTICS
BANDE DE MATIÈRE GÉOLOGIQUE À PROPRIÉTÉS DE BIODÉGRADATION

(30) Priorität: 15.03.2019 EP 19163235
(43) Veröffentlichungstag der Anmeldung: 19.01.2022
(73) Patentinhaber: Naue GmbH & Co. KG, 32339 Espelkamp-Fiestel (DE)
(72) Erfinder: EHRENBERG, Henning, 32312 Lübbecke (DE); VOLLMERT, Lars, 49090 Osnabrück (DE); HOYME, Helge, 30659 Hannover (DE); VISSING, Norbert, 48321 Warendorf (DE); TAZL, Martin, 30167 Hannover (DE)
(74) Vertreter: Eisenführ Speiser
(86) Internationale Anmeldenummer: PCT/EP2020/055476
(87) Internationale Veröffentlichungsnummer: WO 2020/187552

(56) Entgegenhaltungen:
- EP-A1- 3 385 426
- US-A1- 2009 317 583
- DATABASE WPI Week 200758, Derwent World Patents Index; AN 2007-609906, XP002793991
- DATABASE WPI Week 201578, Derwent World Patents Index; AN 2015-701490, XP002793992

## Beschreibung

Die Erfindung betrifft ein Verfahren zur Bodenstabilisierung mittels einer Geomaterialbahn und eine Verwendung einer Geomaterialbahn zur Bodenstabilisierung.

Geomaterialbahnen, auch genannt Geotextilien (oder klassisch Geokunststoffe), werden in vielfältiger Weise dazu eingesetzt, um Bodenschichten zu stabilisieren. Solche unterschiedlichen Einsatzmöglichkeiten von Geomaterialbahnen liegen in der Böschungsbefestigung, dem Deichbau, dem Uferschutz an Flüssen und Seen, der Stabilisierung von Böschungen im Deponiebereich oder der Stabilisierung von Fahrbahntrassen für Straßen und im Gleisbau als typische Beispiele. Geomaterialbahnen werden hierbei in der Regel in einer vorbestimmten Tiefe eingebaut, sind also von Bodenschichten bedeckt, können aber in Einzelfällen auch oberflächlich eingebaut werden.

Die Geomaterialbahn übernimmt hierbei die Aufgabe, die Bodenschicht und Schichtgrenzen zwischen Böden zu stabilisieren, das heißt Erosion oder Bodenumlagerung und Vermischung zu verhindern, Bodenmaterialverbringung, wie beispielsweise durch strömungsbedingten Abtrag und Wiederanlagerung von Bodenmaterial zu unterbinden oder zu verringern und ein insgesamtes Abrutschen von Bodenschichten zu verhindern. Geomaterialbahnen können hierbei als dauerhafte Lösung eingesetzt werden, insbesondere dort, wo durch natürliche Prozesse wie Durchwurzelung oder sonstige Bodenverfestigungsmechanismen keine Stabilisierung der Bodenschicht oder der Schichtgrenzen zu erreichen ist. In vielen Anwendungen werden Geomaterialbahnen verbaut, um einen übergangsweisen, zeitlich begrenzten mechanischen Stabilisierungseffekt zu erzielen, der die Bodenschicht soweit stabilisiert, dass ein Wachstum von Pflanzen erreicht wird und eine zusätzliche Stabilisierung der Bodenschicht durch eine Durchwurzelung mittels dieser wachsenden Pflanzen langfristig erzielt werden kann. Eine Geomaterialbahn in der Anwendung als Bewehrungsmatte ist aus EP 2 439 342 A1 bekannt.

Ein Problem im Zusammenhang mit solchen Geomaterialbahnen liegt darin, dass der in den Boden eingebrachte künstliche Stoff ein potentielles Umweltrisiko darstellt, wobei dieses Umweltrisiko am Einbauort selbst oder, wenn durch mechanische Einflüsse oder andere Einwirkungen die Geomaterialbahn in kleinere Abschnitte zertrennt wird und vom Einbauort weg gelangt, an anderen Orten auftritt. Um diese Nachteile zu überwinden, ist generell vorgeschlagen worden, Geomaterialbahnen aus biologisch abbaubaren Materialien herzustellen. Aus DE 295 16 797 U1 ist beispielsweise eine Abdeckschicht aus einem Material vorbekannt, wobei das Material aus Naturfaser bestehen kann. Aus US 2013/0344759 A1 ist ein Geotextil mit einer nicht gewebten Struktur vorbekannt, bei dem Pflanzenfasern zur Herstellung eingesetzt werden. Hierzu wird, als Ersatz für vorbekannte Jute- oder Kokosnussfasern, Hanffasern vorgeschlagen.

Aus EP3385426A1 ist ein Faserstrukturmaterial vorbekannt, welches für eine erhöhte Wasseraufnahmekapazität ausgelegt ist. Die Faserstruktur dieses vorbekannten Materials ist als dreidimensionales Fasergerüst miteinander verbunder dicker und dünner Faserabschnitte ausgestaltet, das aus einer Lyocell -Lösung hergestellt ist. Dieses Faserstrukturmaterial weist den Nachteil auf, dass es durch die dreidiemnsionale Direktverbindung der Faseranteile untereinander eine einheitliche Biodegradierbarkeit aufweist und daher keine zwei Strukturmaterialien mit unterschiedlicher Biodegradierbarkeit umfasst.

Aus US2009/0317583A1 ist eine textile Dichtungsmembran aus Lyocellfasern vorbekannt. Diese Dichtungsmembran weist keine zwei Strukturmaterialien mit unterschiedlicher Biodegradierbarkeit auf.

Nachteilig an den so vorgeschlagenen, biologisch abbaubaren Geotextilien ist jedoch, dass die gewünschte mechanische Bodenstabilisierung in vielen Anwendungen nicht über den erforderlichen Zeitraum gewährleistet wird, durch den biologischen Abbau die mechanische Schutzwirkung verloren geht und es zu unerwünschten Bodenbewegungen wie Hangabrutschen, Deichschäden und dergleichen kommen kann. Zwar wird zur Vermeidung dieser Probleme eine Faserbeschichtung vorgeschlagen, dies läuft jedoch dem eigentlichen Ziel, eine biologische Abbaubarkeit zu erreichen, entgegen und erzeugt ein Umweltrisiko ausgehend von der Beschichtung. Der Einsatz biologisch abbaubarer Geotextilien aus den o.g. vorbekannten Naturfasern kann daher in vielen Anwendungen keine zufriedenstellenden Ergebnisse bringen oder versagt hinsichtlich der zeitlichen Anforderungen an die mechanische Befestigungswirkung. Für Geokunststoffe gibt die DIN EN 12225 daher Prüfkriterien an, um eine allgemeine Beständigkeit gegen mikrobiellen Abbau nachzuweisen.

Es ist daher Aufgabe der Erfindung, ein Verfahren zur Stabilisierung von Bodenschichten mit einer Geomaterialbahn und Verwendungen von Geomaterialbahnen zur Stabilisierung von Bodenschichten vorzuschlagen, welche eine zuverlässige mechanische Stabilisierung über den notwendigen Einsatzzeitraum gewährleisten, zugleich aber die Umweltbelastung reduzieren.

Diese Aufgabe wird erfindungsgemäß gelöst durch ein Verfahren zur ortsabhängigen Bodenstabilisierung mittels einer Geomaterialbahn, mit den Schritten:
Bestimmen der Intensität eines Einflussparameters am Einbauort, wobei die Intensität des Einflussparameters ausgewählt ist aus:
   - Intensität einer Strahlungseinwirkung einer elektromagnetischen Strahlung,
   - Höhe einer Temperatur,
   - Konzentration eines chemisch und/oder biochemisch mit der Geomaterialbahn reagierenden Stoffes,
   - Konzentration einer Konzentration an Bakterien, und/oder
   - Konzentration von Pilzen,
Bestimmen eines oder mehrerer dieser Einflussparameter an einem vom Einbauort beabstandeten Verbringort,
   - Einbauen der Geomaterialbahn am Einbauort, wobei die Geomaterialbahn ein Strukturmaterial umfasst, das
      ∘ unter der Intensität des Einflussparameters am Verbringort eine biologische Abbaubarkeit in dem Maße aufweist, dass innerhalb von sechs Monaten ein Verbringortrestanteil in einem Sieb von 2mm verbleibt, wenn das Material bzw. seine Bestandteile gesiebt werden,
      ∘ wobei der Verbringortrestanteil kleiner als 30 Gew.-% des Materials ist,
      ∘ unter der Intensität des Einflussparameters am Einbauort eine biologische Abbaubarkeit in dem Maße aufweist, dass innerhalb von sechs Monaten ein Einbauortrestanteil des Materials in einem Sieb von 2mm verbleibt, wenn das Material bzw. seine Bestandteile gesiebt werden,
      ∘ wobei der Einbauortrestanteil größer ist als der Verbringortrestanteil.

Gemäß diesem Aspekt der Erfindung wird eine ortsabhängige Bodenstabilisierung mittels einer Geomaterialbahn erreicht. Hierunter ist zu verstehen, dass die Geomaterialbahn eine biologische Abbauzeitdauer am Einbauort und eine hiervon verschiedene biologische Abbaubarkeit am Verbringort aufweist, die, wie zuvor, beispielsweise analog zur Normierung einer Abbaubarkeit nach ISO16929 oder dem marinen Degradationstest - allerdings mit den am Einbauort bzw. am Verbringort ermittelten Parametern definiert sein kann. Nach den am Einbauort vorherrschenden Bedingungen können nach einem Zeitraum von sechs Monaten bzw. zwölf Wochen mehr als 10 Gew.-%, insbesondere mehr als 25 Gew.-% oder mehr als 80 Gew.- % des Strukturmaterials als Partikel in einem Sieb von 2mm verbleiben. Hierdurch wird eine verringerte biologische Abbaurate am Einbauort erzielt, die für zahlreiche Anwendungen zur Bodenstabilisierung ausreichend ist und einen zuverlässigen Abbau der Geomaterialbahn bewirkt. Diese biologische Abbaubarkeit wird unter den Bedingungen am Einbauort, insbesondere der genannten Einflussparameter Temperatur, Strahlungseinwirkung, Sauerstoff-, Bakterien- und/oder Pilzkonzentration oder dergleichen erreicht. Demgegenüber weist das Material bei dem erfindungsgemäßen Verfahren an einem Verbringort eine höhere biologische Abbaubarkeit auf. Unter den dortigen Bedingungen verbleiben also nach sechs Monaten bzw. zwölf Wochen in einem 2mm Sieb weniger Partikel des Materials als unter den Bedingungen am Einbauort. Dies können am Verbringort bevorzugt weniger als 80 Gew.-%, .-%, insbesondere weniger als 25 Gew.-% oder weniger als 10 Gew.- % des Strukturmaterials innerhalb der sechs Monate bzw. zwölf Wochen in den dort vorherrschenden Bedingungen mit höherer Abbaugeschwindigkeit erzielt.

Der Verbringort kann hierbei ein Ort sein, an dem die Geomaterialbahn nach Ausbau am Einbauort verbracht wird, beispielsweise deponiert wird und der sich hinsichtlich eines der Einflussparameter vom Einbauort unterscheidet. So kann beispielsweise am Deponieort eine planmäßig hergestellte höhere Sauerstoffkonzentration und/oder eine stärkere UV-Einstrahlung und/oder Bakterien- und/oder Pilzkonzentration vorherrschen und den beschleunigten biologischen Abbau der Geomaterialbahn bewirken. Der Verbringort kann auch ein Ort sein, an den die Geomaterialbahn vollständig oder in Fragmenten hingelangt, wenn sie durch Umwelteinflüsse oder andere Einflüsse freigelegt, mechanisch angegriffen wird und dann beispielsweise freiliegt, aufschwimmt oder durch andere Einwirkungen verfrachtet wird. Unter einem Verbringort kann hierbei auch verstanden werden, dass ein ursprünglicher Einbau der Geomaterialbahn am Einbauort unterhalb einer Bodenschicht sich so verändert, dass die Bodenschicht abgetragen wird und die Geomaterialbahn dadurch freiliegt. Dies ist zum Beispiel in vielen marinen Anwendungen des Küstenschutzes und des Kolkschutzes, in denen durch Wasser- und Wellenbewegungen eine Abtrennung und Verbringung des Materials vom Einbauort zu einem Verbringort erfolgen kann, der Fall. Am Verbringort wird die Geomaterialbahn beschleunigt abgebaut und stellt hierdurch keine relevante Umweltbelastung dar.

Dabei ist es bevorzugt, wenn der Einbauort eine Umgebung aufweist, die eine gegenüber dem Verbringort niedrigere Temperatur und/oder einen niedrigeren Sauerstoffgehalt und/oder niedrigere Bakterien- und/oder Pilzkonzentration aufweist. Diese Einflussparameter eignen sich insbesondere für Geomaterialbahnen auf Viskosebasis wie Lyocell gut dafür, um die unterschiedliche biologische Abbaugeschwindigkeit am Einbauort gegenüber dem Verbringort zu erzielen.

Dabei kann insbesondere der Einbauort am Meeresgrund liegen und die Geomaterialbahn durch Strömung und/oder Dichteunterschiede aufschwimmen oder durch anthropogene Einflüsse an die Oberfläche gelangen. Der Verbringort zeichnet sich folglich dadurch aus, dass eine höhere Sauerstoffkonzentration und Temperatur in den oberen Wasserschichten und eine erhöhte UV-Einstrahlung vorliegt und für den beschleunigten Abbau sorgt.

Noch weiter ist es bevorzugt, wenn das Strukturmaterial ein Material auf Viskosebasis ist, insbesondere Lyocell. Ein solches Strukturmaterial hat sich insbesondere als geeignet für die selektiv beschleunigten biologischen Abbauraten am Verbringort gegenüber dem Einbauort erwiesen.

Gemäß diesem Aspekt der Erfindung wird die Geomaterialbahn folglich derart verwendet, dass sie ein Strukturmaterial umfasst, das
- unter einer ersten Intensität eines Einflussparameters an einem Einbauort eine biologische Abbaubarkeit in dem Maße aufweist, dass
- In einem Kompostierungstest mit folgenden Parametern
   ∘ Proben mit einer Länge von 10cm, einer Breite von 10cm und einer Originalmaterialdicke
   ∘ 50°C +/- 5°C
   o thermophile Bedingungen gemäß ISO 16929, sofern diese nicht durch spezifische Intensitäten von spezifischen Einflussparametern am Einbauort definiert sind,
   ∘ Aussiebung der Feststoffe nach sechs Monaten in einem Sieb mit 2mm Maschenweite (Mesh 8,75)
   bei der Siebung mehr als 50 Trocken-Gew.-% des Ausgangsmaterial im Sieb verbleibt, oder dass
- in einem marinen Inkubationstest, mit folgenden Parametern:
   ∘ Proben mit einer Länge von 2cm, einer Breite von 2cm und einer Originalmaterialdicke
   ∘ 30°C +/- 2°C
   ∘ Aerobe Bedingungen in Meerwasser mit einem Salzgehalt von 3,5 Gew.-% +/- 1Gew.-%, sofern diese nicht durch spezifische Intensitäten von spezifischen Einflussparametern am Einbauort definiert sind,
   ∘ Aussiebung der Feststoffe nach 4, 8 und 12 Wochen in einem Sieb mit 2mm Maschenweite (Mesh 8,75)
   bei der Siebung nach 12 Wochen mehr als 10 Trocken-Gew.-%, insbesondere mehr als 25 Trocken-Gew.-% oder mehr als 80 Trocken-Gew.-% des Ausgangsmaterial im Sieb verbleibt, und
unter einer zweiten Intensität des Einflussparameters an einem Verbringort eine biologische Abbaubarkeit in dem Maße aufweist, dass innerhalb von sechs Monaten in dem Kompostierungstest bzw. zwölf Wochen in dem marinen Inkubationstest und
weniger als 80 Gew.-%, insbesondere weniger als 25 Gew.-% oder weniger als 10 Gew.-% der Trockenmasse des ersten Strukturmaterials nach einer Siebung durch ein 2mm-Sieb im Sieb verbleibtwobei die Intensität des Einflussparameters ausgewählt ist aus:
- einer Intensität einer Strahlungseinwirkung einer elektromagnetischen Strahlung
- einer Höhe einer Temperatur,
- einer Konzentration eines chemisch und/oder biochemisch mit der Geomaterialbahn reagierenden Stoffes,
- einer Konzentration an Bakterien,
- einer Konzentration von Pilzen,
in solcher Weise, dass die Geomaterialbahn zu einem Einbauzeitpunkt am Einbauort eingebaut wird und zu einem dem Einbauzeitpunkt folgenden späteren Zeitpunkt an den Verbringort transportiert wird.

Gemäß dieser Verwendung wird eine Geomaterialbahn solcherart eingesetzt, dass sie an einem Einbauort eine vorbestimmte, nicht über eine bestimmte biologische Abbaugeschwindigkeit hinausgehende Abbaurate aufweist, was durch die dort vorherrschenden o.g. Einflussparameter erzielt wird. Demgegenüber wird die Geomaterialbahn so eingesetzt, dass sie dann, wenn sie vom Einbauort an einen Verbringort transportiert wird, was durch einen planmäßigen Transport oder eine unplanmäßige Verfrachtung erfolgen kann, eine höhere Abbaugeschwindigkeit aufweist und sich hierdurch am Verbringort beschleunigt im Vergleich zum Einbauort biologisch abbaut. Dieser beschleunigte Abbau wird erreicht durch die Abhängigkeit der Abbaugeschwindigkeit von einer dort unterschiedlichen Intensität eines Einflussparameters - gfs. auch durch mehrere verschiedene Einflussparameter, die in verschiedenen Intensitäten am Einbauort und am Verbringort vorherrschen - und die in den zuvor definierten Materialprüfungen zur Kompositierbarkeit bzw. zur marinen Degradation als Einflussparameter anstelle der vorgegebenen Parameter eingesetzt werden. Die biologische Abbaubarkeit ist dabei erfindungsgemäß definiert nach dem Prinzip der Norm ISO 16929 oder nach einem durch den TÜV Österreich Belgien entwickelten marinen Degradationstest. Das erfindungsgemäße Material muss zumindest eine dieser beiden Bedingungen erfüllen, vorzugsweise beide.

Nach ISO16929 ist eine Kompostierbarkeit eines Materials nachgewiesen, wenn es drei Kriterien erfüllt. Eines dieser Kriterien ist so definiert, dass nach 84 Tagen in einer kontrollierten Kompostierung nicht mehr als 10 Gew.-% des Materials in einem Sieb von 2mm verbleiben, wenn das Material bzw. seine Bestandteile gesiebt werden. Angelehnt an diese Systematik und adaptiert auf die Bedürfnisse von Geomaterialien weist das erste Strukturmaterial eine erste Biodegradierbarkeit auf, bei der innerhalb von sechs Monaten in der kontrollierten Kompostierung gemäß ISO 16929 unter thermophilen Kompostierungsbedingungen nicht mehr als 50 Gew.-% der Trockenmasse des ersten Strukturmaterials nach einer Siebung durch ein 2mm-Sieb im Sieb verbleibt. Das erste Material qualifiziert sich daher nicht notwendigerweise als kompostierbar im Sinne der ISO16929. Es kann aber kompostierbar sein oder es kann über einen längeren Zeitraum als sechs Monate die Degradation der 90 Gew.-% Partikel <2mm erreichen.

Der Degradationstest unter marinen Bedingungen simuliert den Abbau genormter Proben unter einer beschleunigten Simulation in Meereswasser. Auch hier wird der Abbaugrad durch eine finale Siebung anhand des im Sieb verbleibenden Trockengewichts ermittelt. Die intensivere Beweglichkeit des Materials wird aber durch zwei Zwischensiebungen nach 4 und 8 Wochen simuliert.

Beide Degradationstests werden mit Probekörpern mit definierten Abmessungen vorgenommen. Länge und Breite sind dabei definiert, die Stärke orientiert sich am Originalmaterial, also der Stärke des Materials in der produzierten Bauweise. Dies kann bei Schichtverbunden, in denen das erste und das zweite Strukturmaterial in voneinander separaten, aufeinander liegenden Schichtlagen angeordnet und miteinander verbunden sind die Stärke des Materials in der jeweiligen Schichtlage sein. Wird das Originalmaterial als Verbundschicht, wie beispielsweise als Vlies oder als eine aus zwei unterschiedlichen Fasern gewebten, gewirkten oder in anderer Weise verbundenen Schichtlage produziert, so ist für die Zwecke des Degradationstest eine Probe des Materials in der originalen Materialstärke der Schichtlage zu verwenden, die nur aus dem zu untersuchenden Material hergestellt ist.

Gemäß einem weiteren Aspekt der Erfindung wird die eingangs gestellte Aufgabe gelöst durch eine Geomaterialbahn, umfassend einen ersten Faserstoff auf Viskosebasis, insbesondere Lyocell.

Gemäß diesem Erfindungsaspekt umfasst die Geomaterialbahn einen Faserstoff auf Viskosebasis. Dieser Faserstoff auf Viskosebasis kann als ein erstes Strukturmaterial oder zweites Strukturmaterial in der Geomaterialbahn eingesetzt sein. Grundsätzlich eignen sich erfindungsgemäß Zellulose-Regeneratfasern wie Lyocell gut als Material oder Bestandteil von Geomaterialbahnen.

Die Geomaterialbahn kann alleine aus dem ersten Faserstoff auf Viskosebasis bestehen oder kann weitere Strukturmaterialien, insbesondere weitere Faserstoffe enthalten. Ein Faserstoff auf Viskosebasis kann insbesondere ein Stoff aus Viskosefasern sein, also allgemein ein Stoff, der aus Chemiefasern aus regenerierter Cellulose besteht. Typisch ist hierbei die Cellulose als Filamentgarn oder als Spinnfaser verarbeitet, beispielsweise im Nassspinnverfahren. Viskosefasern haben sich nach Erkenntnis der Erfinder als besonders geeignet herausgestellt, um den für Geomaterialbahnen notwendigen gezielten biologischen Abbau bereitzustellen. So kann einerseits die Viskosefaser durch Modifizierung der Faserlänge, der Kräuselung und durch unterschiedliche Feinheiten, also Faserstärken, an eine gewünschte Geschwindigkeit des biologischen Abbaus unter vorbestimmten Umgebungsbedingungen am Einbauort angepasst werden. Viskosefasern sind darüber hinaus verstoffwechselbar durch zahlreiche Lebewesen und können daher als umweltunschädlich eingestuft werden.

Ein Faserstoff auf Viskosebasis, wie Lyocell, kann insbesondere auch als das erste und/oder zweite Strukturmaterial gemäß des ersten Aspekts der Erfindung eingesetzt werden.

Insbesondere als geeignet erkannt hat der Erfinder Viskosefasern der Gattung Lyocell. Bei diesen Fasern handelt es sich um eine Viskosefaserart, die durch ein Lösungsmittelspinnverfahren hergestellt wird, bei dem die Cellulose direkt ohne Ausbildung eines Derivates in einem organischen Lösungsmittel aufgelöst und die Lösung versponnen wird. Dieser Herstellungsprozess, insbesondere bei Verwendung des organischen Lösungsmittels NMNO (N-Methylmorpholin-N-oxid) ist sowohl in der Produktion als auch hinsichtlich des hergestellten Produkts umweltverträglich. Als Celluloseausgangsstoff kann erfindungsgemäß bevorzugt Holzzellstoff verwendet werden. Lyocell hat sich nach Erkenntnis der Erfinder in typischen Milieubedingungen in Bodenschichten als biologisch abbaubar erwiesen und weist hierbei eine Abbaugeschwindigkeit auf, die mit Durchwurzelungsraten bei Neubepflanzungen so zusammenwirken kann, dass bei Erreichen eines für die mechanische Stabilisierung einer Böschung ausreichenden Durchwurzelungsgrads auch der biologische Abbaugrad der Geomaterialbahn so weit fortgeschritten ist, dass die Durchwurzelung weder maßgeblich behindert wird noch im weiteren zeitlichen Verlauf nennenswerte Restmengen der Geomaterialbahn vorhanden sind. Lyocell hat darüber hinaus eine gute Eignung für einen differenzierten biologischen Abbau nach Erkenntnis der Erfinder. So wird Lyocell unter erhöhter Sauerstoff-, Bakterien- und/oder Pilzkonzentration in der Umgebung und erhöhter UV-Einstrahlung biologisch schneller abgebaut als bei niedrigem Sauerstoff-, Bakterien- und/oder Pilzkonzentration und geringer UV-Einstrahlung. Dies erlaubt es, dass eine Geomaterialbahn planmäßig zur Bodenschichtstabilisierung verbaut wird, an diesem Einbauort auch über den gewünschten Zeitraum die mechanischen Eigenschaften bereitstellt, die zur Bodenstabilisierung notwendig sind, bei beabsichtigter oder unbeabsichtigter Verbringung an einen anderen Ort, an dem dann andere Bedingungen, wie erhöhte Sauerstoff-, Bakterien- und/oder Pilzkonzentration oder UV-Einstrahlung vorliegen, sich jedoch beschleunigt abbaut. Diese Selektivität der Abbaugeschwindigkeit ist beispielsweise für eine Verwendung am Meeresgrund mit niedriger Sauerstoff-, Bakterien- und Pilzkonzentration und niedriger Temperatur und niedriger UV-Einstrahlung vorteilhaft, da unbeabsichtigt aufschwimmendes oder an Orte mit anderen Umgebungsbedingungen verbrachtes Lyocell dann beschleunigt abgebaut wird. Ebenso kann dies bei Küstenschutz und Uferbefestigungsmaßnahmen vorteilhaft sein, bei dem Lyocell in dem Fall, dass es freigelegt wird, durch die erhöhte UV-Einstrahlung und erhöhte Konzentration von Bakterien- und/oder Pilzkonzentration dann beschleunigt abgebaut wird.

Gemäß einer bevorzugten Ausführungsform hierzu ist vorgesehen, dass der erste Faserstoff als Vliesstoff ("nonwoven") oder Maschenware oder Webware ausgebildet ist und in der Geomaterialbahn entsprechend durch mechanische Verfestigung, Wirken, Stricken bzw. Weben zu einem textilen Flächengebilde verarbeitet ist. Durch diese Art der Verbindung des ersten Faserstoffs wird eine belastbare Geomaterialbahn erzielt, die für die mechanischen Belastungen zur Bodenschichtstabilisierung gut geeignet ist. Zugleich wird durch die Verarbeitungsweise ein günstiges Abbauverhalten mit Bereitstellung von Perforationen oder Vergrößerung von Öffnungen sowie einem Abbau der mechanischen Eigenschaften erzielt. Der erste Faserstoff kann hierbei mit einem oder mehreren identischen Faserstoffen zu einer Vliesstoffware oder Maschenware oder Webware verbunden werden. Weiterhin kann der erste Faserstoff mit einem zweiten Faserstoff als Vliesstoffware oder Maschenware oder Webware ausgebildet werden, der hinsichtlich des Materials oder hinsichtlich der Modifikation der Fasern unterschiedlich vom ersten Faserstoff ist. Insbesondere kann hierdurch ein erstes Strukturmaterial und ein zweites Strukturmaterial zu einer Geomaterialbahn verbunden werden.

Gemäß einer weiteren bevorzugten Ausführungsform ist vorgesehen, dass der erste Faserstoff mit einem zweiten Faserstoff, der von dem ersten Faserstoff verschieden ist, zu einem textilen Flächengebilde verarbeitet ist. Ein solches textiles Flächengebilde ist aus zwei unterschiedlichen Faserstoffen oder mehr als zwei unterschiedlichen Faserstoffen ausgebildet. Das textile Flächengebilde kann als Vliesstoff, Maschenware oder als Webware oder als Kombination daraus ausgeführt sein.

Noch weiter ist es bevorzugt, wenn der erste Faserstoff sich von dem zweiten Faserstoff durch eine unterschiedliche Faserdicke, eine unterschiedliche chemische Beschaffenheit, eine unterschiedliche Oberflächenrauhigkeit, einen unterschiedlichen Verstreckungsgrad, einer unterschiedlichen Öffnungs- oder Maschenweite oder einem unterschiedlichen Zugkraft-Dehnungsverhalten oder einer unterschiedlichen Bruchfestigkeit oder eine Kombination von zwei oder mehr dieser Eigenschaften unterscheidet. Gemäß dieser Ausführungsform unterscheiden sich der erste und der zweite Faserstoff in einer oder mehreren von sieben Eigenschaften, welche sowohl die mechanischen Eigenschaften als auch die biologische Abbaugeschwindigkeit des Faserstoffs beeinflussen. Durch diese Ausbildung des textilen Flächengebildes wird erreicht, dass die biologische Abbaugeschwindigkeit und das mechanische Verhalten über die Gebrauchsdauer des ersten Faserstoffs unterschiedlich ist von derjenigen des zweiten Faserstoffs, was sowohl aufgrund einer unterschiedlichen materiellen Beschaffenheit (chemische Beschaffenheit) als auch aufgrund einer Modifikation von materiell übereinstimmenden Faserstoffen erreicht werden kann.

Erfindungsgemäß wird die Geomaterialbahn, welche zuvor beschrieben wurde, dazu verwendet, in eine Bodenschicht zum Zwecke der Bodenstabilisierung eingebaut zu werden. Diese Bodenstabilisierung kann, wie zuvor erläutert, der Böschungsbefestigung, Uferbefestigung, Deichbefestigung im Küstenschutz, der Befestigung des Meeresbodens gegen Kolkeffekte, der Befestigung der Bodenschicht entlang von Verkehrswegen dienen. Diese Verwendungen zeichnen sich dadurch aus, dass einerseits ein biologischer Abbau der Geomaterialbahn am Einbauort selbst vorteilhaft und gewünscht ist, um nach Erreichen eines bestimmten Durchwurzelungsgrads oder einer anderweitig erreichten Verfestigung der Bodenschicht die Geomaterialbahn aufzulösen. Zum anderen sind in diesen Anwendungen Eigenschaften der Geomaterialbahn gewünscht, die dazu führen, dass dann, wenn die Geomaterialbahn vom Einbauort an einen anderen Ort verbracht wird, beispielsweise aufgrund von mechanischer Zersetzung vom Wind verfrachtet wird, aufschwimmt oder durch andere Strömungen verbracht wird, sich an diesem anderen Ort im Vergleich zum Einbauort beschleunigt abbaut und/oder im Vergleich zu herkömmlichen Produkten durch Flora und Fauna verstoffwechselt werden kann.

Ein weiterer Aspekt der Erfindung betrifft die Verwendung einer Geomaterialbahn, die ein Strukturmaterial umfasst, das
- unter einer vorbestimmten Intensität eines Einflussparameters an einem Einbauort eine biologische Abbaubarkeit in dem Maße aufweist, dass
- in einem Kompostierungstest mit folgenden Parametern:
   ∘ Proben mit einer Länge von 10cm, einer Breite von 10cm und einer Originalmaterialdicke
   ∘ 50°C +/- 5°C
   ∘ thermophile Bedingungen gemäß ISO 16929, sofern diese nicht durch spezifische Intensitäten von spezifischen Einflussparametern am Einbauort definiert sind,
   ∘ Aussiebung der Feststoffe nach sechs Monaten in einem Sieb mit 2mm Maschenweite (Mesh 8,75)
   bei der Siebung weniger als 50 Trocken-Gew.-% des Ausgangsmaterial im Sieb verbleibt, oder
- in einem marinen Inkubationstest, mit folgenden Parametern:
   ∘ Proben mit einer Länge von 2cm, einer Breite von 2cm und einer Originalmaterialdicke
   ∘ 30°C +/- 2°C
   ∘ Aerobe Bedingungen in Meerwasser mit einem Salzgehalt von 3,5 Gew.- % +/- 1Gew.-%, sofern diese nicht durch spezifische Intensitäten von spezifischen Einflussparametern am Einbauort definiert sind,
   ∘ Aussiebung der Feststoffe nach 4, 8 und 12 Wochen in einem Sieb mit 2mm Maschenweite (Mesh 8,75)
   bei der Siebung nach 12 Wochen weniger als 20 Trocken-Gew.-% des Ausgangsmaterial im Sieb verbleibt.

wobei die vorbestimmte Intensität des Einflussparameters ausgewählt ist aus:
   - einer Intensität einer Strahlungseinwirkung einer elektromagnetischen Strahlung
   - einer Höhe einer Temperatur,
   - einer Konzentration eines chemisch und/oder biochemisch mit der Geomaterialbahn reagierenden Stoffes,
   - einer Konzentration an Bakterien,
   - einer Konzentration von Pilzen,
zum Stabilisieren einer Bodenschichtlage im Hochwasserschutz oder Kolkschutz.

Gemäß diesem Aspekt der Erfindung wird eine Geomaterialbahn, insbesondere eine Geomaterialbahn der zuvor beschriebenen Bauart, dazu eingesetzt, um eine Bodenstabilisierung zum Kolkschutz oder im Hochwasserschutz zu erreichen. Als Hochwasserschutz kann hierbei jegliche Art von Uferbefestigung am Meeresufer, am Ufer von fließenden und stehenden Gewässern und Seen vorgesehen sein, wobei die Geomaterialbahn im Bereich unterhalb der Wasseroberfläche oder oberhalb der Wasseroberfläche mit jeweiligem optionalem Trockenfallen bzw. Nasswerden angeordnet sein kann. Sie dient in diesem Fall der Sohl-, Böschungs- oder Deichstabilisierung und kann dauerhaft eingesetzt sein oder temporär während der Baumaßnahme bis zu einem ausreichenden Grad der Durchwurzelung mit Pflanzenwerk. Als Kolkschutz wird hierbei der Schutz gegenüber Bodenmaterialverbringung durch Strömungen verstanden. Auch hier kann ein dauerhafter oder temporärer Schutz des Bodens durch die Geomaterialbahn vorgesehen sein. Insbesondere kann ein solcher Kolkschutz beispielsweise durch mit Partikelmaterial wie Sand oder dergleichen befüllte flexible Container, die aus der Geomaterialbahn hergestellt sind, bewerkstelligt werden, die auf der zu stabilisierenden Bodenlage abgelegt werden.

Die Geomaterialbahn wird dabei solcherart verwendet, dass ein gezielter biologischer Abbau erreicht wird. Dieser gezielte biologische Abbau kann einerseits darin bestehen, dass anders als in den vorbekannten Anwendungen am Einbauort selbst eine biologische Abbaubarkeit auftritt und sich die Geomaterialbahn folglich planmäßig innerhalb eines bestimmten Zeitraums auflöst. Die biologische Abbaubarkeit kann auch solcherart vorgesehen sein, dass die Geomaterialbahn an einem Verbringort eine höhere biologische Abbaubarkeit hat als an dem Einbauort. Hierbei wird erreicht, dass dann, wenn die Geomaterialbahn beabsichtigt oder unbeabsichtigt vom Einbauort weg transportiert wird, sie sich an einem Verbringort mit anderen Einflussparametern schneller biologisch abbaut und folglich keine Umweltbelastung darstellt.

Bevorzugt ist vorgesehen, dass die Geomaterialbahn zur Herstellung von befüllbaren Behältern verwendet wird und diese Behälter so verwendet werden, dass sie befüllt am Meeresgrund platziert werden und hierdurch einen Kolkschutz an strömungsbelsteten Orten bereitstellt. Mit dieser Fortbildung wird ein besonders wirksamer Kolkschutz erreicht.

Noch weiter kann die Verwendung fortgebildet werden, indem die Geomaterialbahn im Ufer- oder Küstenschutz an einem Einbauort mit gelegentlichem Trockenfallen oder an einem Einbauort mit gelegentlichem Nasswerden eingebaut wird, wobei die Geomaterialbahn bevorzugt eine geringere Dichte als Wasser aufweist. Insbesondere bei gelegentlichem Trockenfallen oder Nasswerden kann ein unbeabsichtigtes Freisetzen einer Geomaterialbahn bei solchen Befestigungsmaßnahmen auftreten und dann die besondere Eigenschaft eines biologischen Abbaus sich vorteilhaft auswirken.

Ein weiterer Aspekt der Erfindung ist ein Verfahren zur Bodenbefestigung mittels einer Geomaterialbahn, umfassend die Schritte: a) Bestimmen eines eine Bodeneigenschaft an einem Einbauort charakterisierenden Bodenparameterwertes, b) Bestimmen eines eine biologische Abbaugeschwindigkeit charakterisierenden Abbauwertes, c) Auswählen eines Mischungsverhältnisses eines ersten und zweiten Strukturmaterials, die eine unterschiedliche biologische Abbaubarkeit aufweisen, anhand des Bodenparameterwertes und des Abbauwertes, d) Verbinden des ersten und zweiten Strukturmaterials zu einer Geomaterialbahn in dem Mischungsverhältnis, e) Bereitstellen der Geomaterialbahn zum Einbau am Einbauort.

Gemäß diesem Aspekt der Erfindung wird eine Bodenbefestigung an einem Einbauort vorgenommen, indem dort eine Geomaterialbahn bereitgestellt wird, um diese in der Bodenschicht am Einbauort einzubauen. Dazu müssen Bodeneigenschaften bekannt sein. Dies bedeutet, dass zumindest eine Eigenschaft des Bodens, welche die biologische Abbaubarkeit in relevanter Weise beeinflusst, ermittelt oder gemessen wird. So kann beispielsweise der Feuchtigkeitsgehalt des Bodens, der pH-Wert, die Nährstoffkonzentration, das Vorhandensein von Bakterien und Pilzen und/oder die Temperatur des Bodens als durchschnittliche Temperatur über einen Tageszeitraum, einen Wochenzeitraum, einen Monatszeitraum oder einen Jahreszeitraum angenommen oder ermittelt werden. Es kann weiterhin die Intensität der UV-Einstrahlung am Einbauort gemessen werden.

Diese Einbauort-spezifischen Parameter berücksichtigen die Einflussparameter auf den biologischen Abbauvorgang, welche am Einbauort vorherrschen. Aus diesen Parametern kann ein Kennwert, beispielsweise als dimensionsloser Faktor oder als Erfahrungswert aus Tabellen, bestimmt werden. So kann beispielsweise die zuvor erläuterte nach ISO 16929 definierte Kompostierbarkeit oder Degradation unter marinen Bedingungen als Normvergleichswert dienen und der Abbauwert in Relation zu diesem Vergleichswert definiert sein, beispielsweise indem eine prozentual geringere Abbaueigenschaft durch die Bodeneigenschaften durch eine entsprechende Prozentzahl unter 100% charakterisiert wird oder eine höhere biologische Abbaugeschwindigkeit am Einbauort durch den Abbauwert charakterisiert wird, indem ein über 100 % liegender Wert als Abbauwert angesetzt wird.

Weiterhin wird ein Abbauwert bestimmt, der definiert, innerhalb welchen Zeitraums ein bestimmter biologischer Abbaugrad der Geomaterialbahn oder eines Bestandteils der Geomaterialbahn erreicht sein soll.

Anhand des Bodenparameterwertes und des Abbauwertes wird dann ein Mischungsverhältnis eines ersten zu einem zweiten Strukturmaterial ausgewählt. Das erste und das zweite Strukturmaterial weisen dabei eine unterschiedliche biologische Abbaubarkeit bzw. Abbaugeschwindigkeit bei dem Bodenparameterwert auf. Durch das Mischungsverhältnis kann dabei eine insgesamt erzielte biologische Abbaugeschwindigkeit der Geomaterialbahn, die aus dem ersten und dem zweiten Strukturmaterial aufgebaut wird, bereitgestellt werden. Diese biologische Abbaugeschwindigkeit hängt dabei von dem Bodenparameterwert ab, der am Einbauort angenommen oder gemessen wurde und soll so ausgewählt sein, dass der gewünschte Abbauwert, welcher die Rate des biologischen Abbaus der Geomaterialbahn beschreibt, erzielt wird.

Nach Auswahl des Mischungsverhältnisses werden das erste und das zweite Strukturmaterial zu der Geomaterialbahn verbunden. Dieses Verbinden kann als Vliesstoff, Maschenware, Wirkware oder in anderer Form erfolgen und soll den ersten und den zweiten Faserstoff mechanisch belastbar miteinander verbinden. Die so hergestellte Geomaterialbahn ist folglich maßgeschneidert für den Einsatz und gezielten biologischen Abbau am Einbauort mit den dort vorherrschenden Bedingungen.

Mit dieser Lösung wird erreicht, dass weder ein zu schneller noch ein zu langsamer biologischer Abbau der Geomaterialbahn auftritt, indem die auf den biologischen Abbau Einfluss nehmenden Bodenparameter in die Gestaltung der Geomaterialbahn einbezogen werden. Hierbei wird ein gezieltes Abbauverhalten, charakterisiert durch den Abbauwert, durch ein Mischungsverhältnis von zwei Faserstoffen eingestellt.

Das Verfahren kann fortgebildet werden, indem der Bodenparameterwert ein Bodenfeuchtigkeitsgehalt des Bodens am Einbauort, beispielsweise zwischen 3 und 300 Gew.-%, ein Boden- pH-Wert des Bodens am Einbauort, beispielsweise zwischen 1 und 13, eine Enzymkonzentration in dem Boden am Einbauort, eine Temperatur zwischen 4°C und 50°C, oder ein aus mehreren dieser Bodenparameterwerte gebildeter Bodenkennwert ist. Mit diesen Bodenparameterwerten werden signifikante Einflussgrößen auf die biologische Abbaugeschwindigkeit typischer Faserstoffe, wie beispielsweise Viskosefasern wie Lyocell bestimmt und können folglich herangezogen werden, um die Geomaterialbahn mit einer individuell für den Einbauort gestalteten biologischen Abbaubarkeit auszubilden.

Dabei ist es besonders bevorzugt, wenn der Abbauwert ein Festigkeitsquotient, gebildet aus dem Verhältnis eines mechanischen Festigkeitswertes zu einer Einbauzeitdauer der Geomaterialbahn im Vergleich zum Ausgangswert, ein Durchlässigkeitsquotient, gebildet aus dem Verhältnis einer Porosität zu einer Einbauzeitdauer der Geomaterialbahn im Vergleich zum Ausgangswert, oder ein aus mehreren dieser Abbauwerte gebildeter Abbaukennwert ist. Gemäß dieser Ausführungsform wird der Abbauwert entweder als Festigkeitsquotient oder als Durchlässigkeitsquotient definiert oder als ein Abbaukennwert, der aus dem Festigkeitsquotienten und dem Durchlässigkeitsquotienten berechnet ist. Der Festigkeitsquotient charakterisiert hierbei die Abnahme der mechanischen Festigkeit der Geomaterialbahn über eine Verweildauer der Geomaterialbahn im Boden. Dieser Festigkeitsquotient wird gebildet aus dem Verhältnis des mechanischen Festigkeitswertes zum Zeitpunkt des Einbaus, also bei noch nicht aufgetretenem biologischen Abbau, und dem mechanischen Festigkeitswert nach einer vorbestimmten Verweildauer, die beispielsweise normiert auf drei oder sechs Monate sein kann und die mechanische Festigkeit nach erfolgtem biologischem Abbau zu einem bestimmten Grad charakterisiert. In analoger Weise wird der Durchlässigkeitsquotient bestimmt, indem eine Porosität zu Beginn, also zum Zeitpunkt des Einbaus im Verhältnis zu einer Porosität nach einem erfolgten biologischen Abbau über einen vorbestimmten Zeitraum gesetzt wird. Durch diese Charakterisierung der Abbauwerte lassen sich die gewünschten Eigenschaften gezielt bestimmen und folglich beeinflussen, indem eine entsprechende Materialauswahl erfolgt. Ein Festigkeitsquotient liegt in der Größenordnung 1,0 bis 0 und beträgt typischer Weise 0,25, d.h. die Festigkeit zu einem definierten Zeitpunkt ist nach erfolgtem biologischem Abbau im Vergleich zum Ausgangswert um das Vierfache reduziert. Ein typischer Durchlässigkeitsquotient liegt in der Größenordnung einer bis vier Zehnerpotenzen und beträgt idealerweise > 10, d.h. die Durchlässigkeit ist zu einem definierten Zeitpunkt nach erfolgtem biologischem Abbau im Vergleich zum Ausgangswert um das Zehnfache gestiegen.

Die zuvor beschriebenen spezifischen Verwendungen und die Verfahren zu deren Einsatz können fortgebildet werden, indem die Geomaterialbahn eine Polymergruppe aufweist, die ein mit einer Isotopenmarkierung versehenes Molekül umfasst, insbesondere eine ¹³C oder ¹⁸O-Isotopenmarkierung. Gemäß dieser Fortbildungsform wird die Geomaterialbahn mit einer Isotopenmarkierung versehen und kann daher auch in später vorliegender, etwaig fragmentierter Form eindeutig identifiziert werden. Auf diese Art und Weise kann daher eine auftretende Umweltbelastung zweifelsfrei zugeordnet oder ausgeschlossen werden und die Ursache einer solchen Umweltbelastung rasch und zuverlässig aufgefunden werden.

Weiterhin kann das Verfahren und die Verwendung fortgebildet werden, indem die Geomaterialbahn ein Strukturmaterial umfasst oder aus einem oder mehreren Strukturmaterialien besteht, das/die verstoffwechselbar ist/sind. Eine solche Verstoffwechselung durch Lebewesen, wie Säugetiere, Fische oder Kleinstlebewesen wie Mikroben, führt zur Reintegration der Geomaterialbahn in den Biokreislauf und damit zur umweltunschädlichen Beseitigung. Die Verstoffwechselung kann bevorzugt an Fragmenten wie zerkleinerten Faserresten der Geomaterialbahn erfolgen. Unter einer Verstoffwechselung ist hierbei einerseits eine biologisch unbedenkliche Verträglichkeit der Geomaterialbahn für Lebewesen zu verstehen, darüber hinaus eine Fähigkeit der Geomaterialbahn, unter den Stoffwechselprozessen im Verdauungstrakt eines Lebewesens chemisch verändert und abgebaut zu werden.

Weiterhin ist es bevorzugt, wenn die Geomaterialbahn durch einen ein- oder mehrschichtigen Filtervliesstoff gebildet wird, der aus mindestens zwei unterschiedlichen Strukturmaterialen hergestellt ist, die zu einem Vliesstoff miteinander verbunden sind, wobei
- Ein erstes Strukturmaterial unter einer vorbestimmten Intensität eines Einflussparameters an einem Einbauort eine biologische Abbaubarkeit in dem Maße aufweist, dass
   - In einem Kompostierungstest mit folgenden Parametern:
      ∘ Proben mit einer Länge von 10cm, einer Breite von 10cm und einer Originalmaterialdicke
      ∘ 50°C +/- 5°C
      ∘ thermophile Bedingungen gemäß ISO 16929, sofern diese nicht durch spezifische Intensitäten von spezifischen Einflussparametern am Einbauort definiert sind,
      ∘ Aussiebung der Feststoffe nach sechs Monaten in einem Sieb mit 2mm Maschenweite (Mesh 8,75)
   - bei der Siebung weniger als 80 Gew.-%, insbesondere weniger als 25 Gew.- % oder weniger als 10 Gew.- % der Trockenmasse des ersten Strukturmaterials nach zwölf Wochen im Sieb verbleibt, oder
   - in einem marinen Inkubationstest, mit folgenden Parametern:
      ∘ Proben mit einer Länge von 2cm, einer Breite von 2cm und einer Originalmaterialdicke
      ∘ 30°C +/- 2°C
      ∘ Aerobe Bedingungen in Meerwasser mit einem Salzgehalt von 3,5 Gew.-% +/- 1Gew.-%, sofern diese nicht durch spezifische Intensitäten von spezifischen Einflussparametern am Einbauort definiert sind,
      ∘ Aussiebung der Feststoffe nach 4, 8 und 12 Wochen in einem Sieb mit 2mm Maschenweite (Mesh 8,75)
      bei der Siebung nach 12 Wochen weniger als 80 Gew.-%, insbesondere weniger als 25 Gew.-% oder weniger als 10 Gew.- % der Trockenmasse des ersten Strukturmaterials bei der Siebung nach zwölf Wochen im Sieb verbleibt.

   wobei die vorbestimmte Intensität des Einflussparameters ausgewählt ist aus:
      - einer Intensität einer Strahlungseinwirkung einer elektromagnetischen Strahlung
      - einer Höhe einer Temperatur,
      - einer Konzentration eines chemisch und/oder biochemisch mit der Geomaterialbahn reagierenden Stoffes,
      - einer Konzentration an Bakterien,
      - Einer Konzentration von Pilzen,
   und ein zweites Strukturmaterial mit dem ersten Strukturmaterial zu dem Filtervliesstoff verbunden ist, wobei das zweite Strukturmaterial unter der gleichen vorbestimmten Intensität des Einflussparameters an dem gleichen Einbauort eine geringere biologische Abbaubarkeit in dem Maße aufweist, dass innerhalb von sechs Monaten unter den gleichen Bedingungen ein größerer Gew.-%-Anteil der Trockenmasse des zweiten Strukturmaterials nach sechs Monaten bzw. zwölf Wochen bei einer Siebung durch ein 2mm-Sieb im Sieb verbleibt als beim ersten Strukturmaterial. Gemäß dieser Fortbildungsform ist die Geomaterialbahn als Vliesstoff ausgebildet, der aus zwei unterschiedlichen Strukturmaterialien besteht, die eine unterschiedliche biologische Abbaugeschwindigkeit unter den gegebenen, vorbestimmten Parametern aufweist. Hierdurch kann der Vliesstoff einerseits eine gezielte mechanische Strukturschwächung durch den biologischen Abbauvorgang erfahren, andererseits eine geometrische Änderung mit Porenbildung, Perforationsbildung oder dergleichen, um beispielsweise einen Durchwurzelungsprozess zu befördern.

Gegenüber dem ersten Strukturmaterial weist das zweite Strukturmaterial eine zweite biologische Abbaubarkeit auf, die anders, insbesondere geringer ist als diejenige des ersten Strukturmaterials, das heißt, nach sechs Monaten bzw. zwölf Wochen verbleibt ein zweiter Gewichtsprozent-Anteil des zweiten Strukturmaterials im 2mm-Sieb, der unterschiedlich, insbesondere höher als derjenige des ersten Strukturmaterials ist. Wenn also beispielsweise in dem Kompostierungstest innerhalb von sechs Monaten 70 Gew.-% des ersten Strukturmaterials in Partikel <2mm abgebaut ist, kann im gleichen Zeitraum unter denselben Bedingungen ein Gewichtsprozent-Anteil von 60 % des zweiten Strukturmaterials in Partikel <2mm abgebaut sein.

Mit der Erfindung wird folglich eine Geomaterialbahn bereitgestellt, welche durch den biologischen Abbau in definierter Weise eine Materialumwandlung in Kohlendioxid erfährt, wobei eines der beiden Strukturmaterialien, welche in der Geomaterialbahn umfasst sind oder aus der die Geomaterialbahn aufgebaut ist, schneller biologisch abgebaut wird als das andere. Hierdurch können sowohl geometrische als auch mechanische Eigenschaften der Geomaterialbahn gezielt durch den biologischen Abbau beeinflusst werden. Beispielsweise kann durch den rascheren Abbau des ersten Strukturmaterials in der Geomaterialbahn eine Ausbildung von Öffnungen oder Poren erzielt werden, die für einen Durchwurzelungsprozess vorteilhaft sind, indem die mit zunehmender Durchwurzelung auftretende erhöhte Raumforderung der Pflanzenwurzeln durch den biologischen Abbau des ersten Strukturmaterials bereitgestellt wird, zugleich aber die noch notwendige mechanische Stabilisierung durch das zweite Strukturmaterial erhalten bleibt. Weiterhin kann beispielsweise bei Geweben oder Gewirken oder Vliesstoffen oder Verbundstoffen aus dem ersten und zweiten Strukturmaterial eine mechanische Eigenschaft in einer ersten Richtung, in der im Wesentlichen das erste Strukturmaterial in der Geomaterialbahn verläuft, stärker verringert werden als eine mechanische Eigenschaft in einer hiervon abweichenden zweiten Richtung, in welcher im Wesentlichen das zweite Strukturmaterial in der Geomaterialbahn verläuft. So kann beispielsweise bei einer Böschungsbefestigung eine Stabilität quer zur Hangrichtung rascher abgebaut werden als eine Stabilität in Hangrichtung, wodurch eine für das Pflanzenwachstum gewünschte leichte Beweglichkeit der Geomaterialbahn erzielt wird, zugleich aber ein Abrutschen in Hangrichtung verhindert wird. Die beiden Strukturmaterialien können sich beispielsweise darin unterscheiden, dass das erste Strukturmaterial aus einem anderen Werkstoff besteht als das zweite Strukturmaterial oder einen anderen werkstoff enthält als das zweite Strukturmaterial. Der Unterscheid kann auch darin bestehen, dass der Werkstoff des ersten und zweiten Strukturmaterials identisch ist, jedoch der Werkstoff des ersten Strukturmaterials eine andere Werkstoffbehandlung erfahren hat als der Werkstoff des zweiten Strukturmaterials. Der erste und zweite Strukturwerkstoffunterscheiden sich vorzugsweise nicht hinsichtlich spezifischer Eigenschaften wie der Faserdicke und/oder der Faserlänge.

Grundsätzlich können neben der Beeinflussung der geometrischen und mechanischen Eigenschaften durch spezifische Anordnung des ersten und des zweiten Strukturmaterials in der Geomaterialbahn auch durch Auswahl und Anteilsverhältnisse des ersten und des zweiten Strukturmaterials die mechanischen Eigenschaften über den Abbauzeitraum der Geomaterialbahn insgesamt beeinflusst werden. Dies ermöglicht in vorteilhafter Weise, dass die biologische Abbaugeschwindigkeit und Verringerung der mechanischen/geometrischen Eigenschaften an örtliche Begebenheiten am Einbauort der Geomaterialbahn angepasst werden kann. Während die normierte biologische Abbaubarkeit unter normierten Bedingungen bestimmt wird, können am Einbauort unterschiedliche Einflussparameter für die biologische Abbaubarkeit vorherrschen. So kann beispielsweise ein erhöhter Sauerstoffgehalt zu einem schnelleren biologischen Abbau führen und umgekehrt ein reduzierter Sauerstoffgehalt zu einem langsameren biologischen Abbau. Des Weiteren können Einflussfaktoren wie erhöhte UV-Strahlung, ein hoher oder niedriger pH-Wert, ein erhöhtes Nährstoffangebot, ein erhöhter Anteil an Bakterien, ein erhöhter Anteil an Pilzen und andere Faktoren die biologische Abbaugeschwindigkeit beeinflussen. Durch die Möglichkeit, bei der erfindungsgemäßen Geomaterialbahn das Mischungsverhältnis des ersten und des zweiten Strukturmaterials zu verändern, kann folglich beispielsweise dann, wenn durch lokale Einflussfaktoren am Einbauort mit einer erhöhten biologischen Abbaugeschwindigkeit zu rechnen ist, der Anteil des zweiten Strukturmaterials erhöht werden oder umgekehrt, wenn mit Einflussfaktoren, die die biologische Abbaugeschwindigkeit reduzieren am Einbauort zu rechnen ist, durch Erhöhung des Anteils des ersten Strukturmaterials diesem begegnet werden, um auf diese Weise eine an die örtlichen Gegebenheiten angepasste Geomaterialbahn mit einer maßgeschneiderten biologischen Abbaugeschwindigkeit zu erhalten.

Bevorzugt ist vorgesehen, dass die erste biologische Abbaubarkeit größer ist als die zweite biologische Abbaubarkeit. Gemäß dieser Ausführungsform weist das zweite Strukturmaterial eine geringere biologische Abbaubarkeit auf als das erste Strukturmaterial, das heißt, das zweite Strukturmaterial baut sich langsamer ab als das erste Strukturmaterial. Grundsätzlich kann beispielsweise das erste Strukturmaterial eine Abbaubarkeit aufweisen, bei der nach sechs Monaten bzw. zwölf Wochen mind. 90 Gew.-% des ersten Strukturmaterials zu Partikeln kleiner 2mm abgebaut ist, wohingegen es beim zweiten Strukturmaterial nur 80 Gew.-% oder weniger sind. Dies bedeutet, dass bei dem ersten Material weniger als 10 Gew.-% des Materials im 2mm-Sieb verbleiben, wohingegen es beim zweiten Material mehr als 20 Gew.-% sind. Bevorzugt weist das zweite Strukturmaterial eine biologische Abbaubarkeit auf, bei der nach sechs Monaten weniger als 50 % zu Partikeln kleiner 2mm abgebaut ist.

Noch weiter ist es bevorzugt, wenn das erste Strukturmaterial in der Geomaterialbahn so angeordnet ist, dass nach teilweisem oder vollständigem biologischem Abbau des ersten Strukturmaterials in der Geomaterialbahn die Geomaterialbahn durchsetzende Öffnungen ausgebildet sind. Gemäß dieser Ausführungsform verändert sich durch den schnelleren Abbau des ersten Strukturmaterials die geometrische Erscheinung der Geomaterialbahn, indem die Geomaterialbahn durchsetzende Öffnungen entstehen. Das erste Strukturmaterial ist folglich in der Geomaterialbahn so angeordnet, dass es im Ausgangszustand diese Öffnungen verschließt und durch seinen Abbau diese Öffnungen freigibt bzw. diese Öffnungen entstehen. Die Geomaterialbahn wird hierdurch perforiert bzw. in stärkerem Maße perforiert und passt sich folglich einem Durchwurzelungsprozess an, der mit zunehmender Durchwurzelung einerseits mehr Durchlässigkeit der Geomaterialbahn erforderlich macht, andererseits auch eine geringere mechanische Festigkeit der Geomaterialbahn erfordert. Die gewünschte Wirkung mit einer Ausbildung von Öffnungen durch Abbau des ersten Strukturmaterials lässt sich beispielsweise erreichen, indem das erste und zweite Strukturmaterial zu einem Vliesstoff miteinander verarbeitet wird.

Es ist weiter bevorzugt, dass das erste Strukturmaterial das zweite Strukturmaterial teilweise oder vollständig durchdringt. Mittels einer solchen Durchdringung kann einerseits eine bestimmte, gerichtete oder ungerichtete mechanische Destabilisierung der Geomaterialbahn durch den biologischen Abbau des ersten Strukturmaterials erreicht werden. Zum anderen können bestimmte gerichtete oder ungerichtete Kanäle und Öffnungen im zweiten Strukturmaterial durch den biologischen Abbau des ersten Strukturmaterials entstehen, die entlang der Durchdringung verlaufen.

Noch weiter ist es bevorzugt, dass das erste Strukturmaterial und das zweite Strukturmaterial als Schichtverbund miteinander verbunden sind, das zweite Strukturmaterial eine Vielzahl von zweiten Perforationsöffnungen aufweist und das erste Strukturmaterial keine Perforationsöffnungen aufweist, oder eine Vielzahl von ersten Perforationsöffnungen aufweist, die kleiner sind als die zweiten Perforationsöffnungen. Durch diese Ausgestaltung wird erreicht, dass durch den schnelleren Abbau des ersten Strukturmaterials größere, die Geomaterialbahn insgesamt durchsetzende Öffnungen entstehen können.

Eine weitere Fortbildung sieht vor, dass die Verwendung so fortgebildet wird, dass die Geomaterialbahn als Element in Konstruktionen, die der Beinflussung von Luftströmungen dienen, so eingebaut wird, dass insbesondere die Geschwindigkeit der Luftströmung lokal verringert wird zum Zwecke der Ablagerung von Partikeln, die bei nicht verringerter Luftgeschwindigkeit in der Luft schwebend transportiert werden, springen oder rollen. Die Geomaterialbahn, die Verwendung und das Verfahren dient damit der Ablagerung von Mineralstoffen, insbesondere Sand, an z.B. Küstenabschnitten, die durch Sanderosion gefährdet sind. Die Verringerung der Luftgeschwindigkeit führt damit zum Ablagern von Sand, bevorzugt in Lee der Konstruktionen. Die Konstruktion wird dabei teilweise oder vollständig eingesandet. Die erfindungsgemäße Geomaterialbahn wird damit Bestandteil der Sandablagerung, und kann, soweit die Konstruktion innerhalb der Sandablagerung erfindungsgemäß abgebaut werden oder, wenn die Konstruktion durch eine Veränderung der Erosionsbedingungen wieder freigelegt wird, erfindungsgemäß am Einbau- oder Verbringungsort abgebaut werden.

Bevorzugte Ausführungsformen werden anhand der Figuren erläutert. Es zeigen:

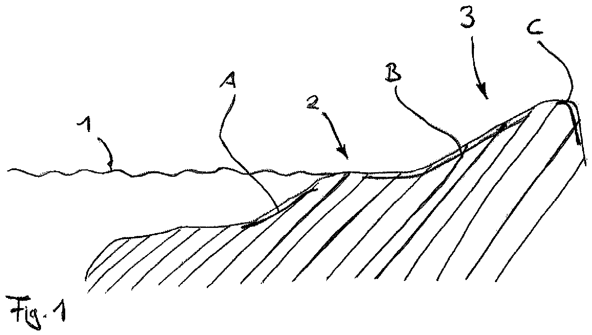

- Fig. 1: eine schematische Darstellung einer erfindungsgemäßen Verwendung der Geomaterialbahn in drei unterschiedlichen Anordnungen zum Küstenschutz,
- Fig. 2a, b: eine erfindungsgemäße Verwendung der Geomaterialbahn zur Böschungsbefestigung in zwei unterschiedlichen Durchwurzelungszeitpunkten,
- Fig. 3: eine schematische Darstellung einer ersten Ausführungsform der Geomaterialbahn,
- Fig. 4: eine schematische Darstellung einer zweiten Ausführungsform der Geomaterialbahn,
- Fig. 5: eine schematische Darstellung einer dritten Ausführungsform der Geomaterialbahn,
- Fig. 6: eine schematische Darstellung einer vierten Ausführungsform der Geomaterialbahn.

Die erfindungsgemäß eingesetzte Geomaterialbahn kann grundsätzlich in drei unterschiedlichen Einbausituationen bezüglich eines Wasserkontakts im Uferböschungsbereich eingebaut werden. Ausgehend von einem natürlichen Uferbereich 2, an den die Wasserlinie oder bei tidenabhängigen Gewässern die durchschnittliche Wasserhöhe angrenzt und die ggf. durch einen künstlichen Deich 3 gegen Hochwassersituationen abgesichert ist, kann eine Geomaterialbahn zunächst in einer Einbaulage A eingesetzt werden, um den Unterwasserterrainverlauf des natürlichen Meeresbodenverlaufs, in dem eine Stabilisierung des Boden mit Pflanzen nur unzureichend möglich ist, zu stabilisieren. In dieser Einbaulage A ist die Geomaterialbahn in der Regel unter Wasser und kann in Ausnahmefällen bei Niedrigwasser oder starkem Wellengang trockenfallen.

In einer zweiten Einbaulage B ist die Geomaterialbahn zur Befestigung der natürlichen Uferböschung und/oder der Befestigung der künstlichen Deichböschung wasserseitig verbaut. In dieser Einbaulage stabilisiert die Geomaterialbahn den in der Regel trockenen Uferanteil der natürlichen Böschung und ggf. der künstlichen Böschung des Deiches. Sie ist folglich in der Regel trocken, kann aber bei Hochwassersituationen oder bei starkem Wellengang auch unter Wasser stehen.

In einer dritten Einbaulage C ist die Geomaterialbahn in einem Bereich eingesetzt, wie beispielsweise der Rückseite des Deiches, in der sie dem Gewässer selbst nicht ausgesetzt ist und nur bei besonderen Situationen wie einer Überströmung einer Beanspruchung ausgesetzt sein kann. In dieser Einbaulage ist die Geomaterialbahn folglich stets trocken und ist wie in jeder Einbaulage nur durch Regenfälle einer Befeuchtung ausgesetzt.

Jede der drei Einbaulagen erfordert unterschiedlich abgestimmtes Verhalten von Geomaterialbahnen, um ein ökologisch günstiges Verhalten zu erreichen. So wird in der Einbaulage A eine Stabilität der Geomaterialbahn im wässrigen Milieu gefordert, wenn aber aufgrund von abrasiven Ereignissen sich Teile dieser Geomaterialbahn lösen und daher auch nicht mehr an ihrem zur Funktionserfüllung erforderlichen Ort sind, ist ein Abbau dieser gelösten Geomaterialbahnanteile gewünscht. Erfindungsgemäß kann dies erfolgen, indem beispielsweise die Geomaterialbahn aus einem Material ausgebildet ist, das unter Einfluss von UV-Strahlung rasch abgebaut wird. Hierdurch wird erreicht, dass aufschwimmende oder an Land geschwemmte, abgerissene Teile der Geomaterialbahn einem raschen Abbau unterzogen werden, wohingegen am Einbauort, wenn keine UV-Strahlung auf die Geomaterialbahn trifft, die mechanische Stabilität erhalten bleibt. Statt der Spezifikation der Geomaterialbahn auf die UV-Strahlung kann beispielsweise auch eine Spezifikation der biologischen Abbaubarkeit in Abhängigkeit vom Sauerstoffgehalt des Wassers und/oder der Bakterienkonzentration und/oder der Pilzkonzentration in bestimmten Anwendungen erfolgen. Dies eignet sich insbesondere dann, wenn Geomaterialbahnen in großer Meerestiefe eingesetzt werden, wo insbesondere eine niedrige Konzentrationen der vorgenannten Einflussparameter vorherrscht. In diesem Fall kann das Material der Geomaterialbahn so ausgelegt sein, dass es in der planmäßigen Einbausituation und dem umgebenden Wassers mechanisch stabil ist und sich biologisch abbaut, sobald der die Konzentration von Einflussparametern in umgebenden Wasser oder am Verbringungsort erhöht ist.

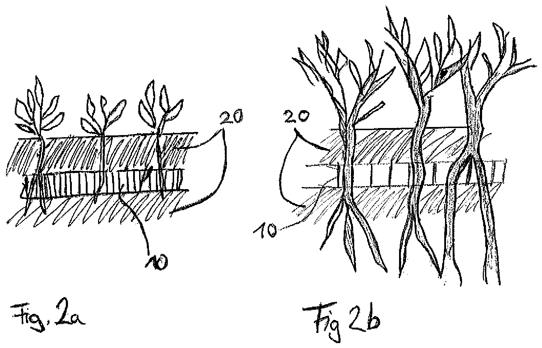

Die Einbausituation gemäß C ist beispielsweise hinsichtlich der Durchwurzelung und des Anpassens der Geomaterialbahn an Durchwurzelungsvorgänge für die Erfindung relevant. Fig. 2a und b zeigen zwei zeitlich aufeinanderfolgende Durchwurzelungssituationen, in denen eine Geomaterialbahn 10 zur Stabilisierung einer Bodenschicht 20 in einer bestimmten Tiefe des Bodens verbaut ist. Wie man aus Fig. 2a erkennt, weist die Geomaterialbahn 10 in einem frühen Stadium, kurz nach Setzen von bodenstabilisierenden Pflanzen, eine hohe Dichte mit nur kleinen Öffnungen auf und stellt hierdurch eine hohe mechanische Stabilisierung des Bodens bereit. Die gesetzten Pflanzen können mit kleinen Wurzeltrieben die Geomaterialbahn durchdringen und werden hierdurch im Wachstum nicht behindert. Ein wirksamer mechanischer Verbund aus Geomaterialbahn und den Pflanzen wird in diesem frühen Stadium bereits erreicht.

Fig. 2b zeigt die gleiche Einbausituation nach einigen Wochen des Pflanzenwachstums. Die Geomaterialbahn hat sich durch einen biologischen Abbau mechanisch teilweise zersetzt. Sie weist größere Öffnungen auf und eine geringere mechanische Stabilität. Durch die größeren Öffnungen werden die wachsenden Pflanzen in ihrer Durchwurzelung und der Vergrößerung der Wurzeldurchmesser nicht gehindert und können daher die mechanische Stabilisierungsfunktion übernehmen. Mit der erfindungsgemäßen Geomaterialbahn wird daher eine kontinuierliche Verlagerung der mechanischen Stabilität der Bodenlage aus der Geomaterialbahn auf die Pflanzen erreicht, wobei gleichzeitig eine gute mechanische Verbindung zwischen den Pflanzen und der Geomaterialbahn aufrechterhalten bleibt und die Geomaterialbahn weiterhin, ggf. in der Richtung unterschiedliche, mechanische Eigenschaften aufweist und Funktionen zur Stabilisierung des Bodens übernimmt.

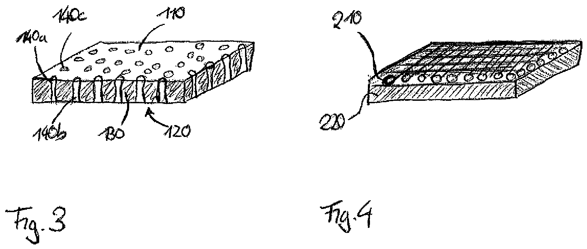

Fig. 3 bis 6 zeigen beispielhafte Ausführungsformen einer Geomaterialbahn. Grundsätzlich können die Geomaterialbahnen gemäß der Erfindung in unterschiedlichen Breiten und Längen bereitgestellt werden. Typische Breiten sind hierbei größer als 1m, 1,5m oder 2m und kleiner als 4m, 5m oder 6m und typische Längen sind hierbei länger als 2 m, 5 m, 10 m, 50 m, wobei die Geomaterialbahn bevorzugt in aufgerolltem Zustand transportfähig ist und beim Einbau abgerollt wird. Die Stärke der Geomaterialbahn kann größer als 1 mm sein, bevorzugt sind Stärken von mehr als 5 mm, 10 mm oder mehr als 20 mm. Die Geomaterialbahn kann ein Flächengewicht aufweisen, das größer als 150, größer als 300 oder größer als 500 g/m² ist. Das Flächengewicht kann kleiner als 1500, kleiner als 2000 g/m² oder kleiner als 2500 g/m² sein.

Fig. 3 zeigt eine erste Ausführungsform mit einer Decklage 110, einer Trägerlage 120 und einer zwischen Decklage 110 und Trägerlage 120 angeordneten Mittellage 130. Deck- und Trägerlage 110 und 120 können aus unterschiedlichen oder übereinstimmenden Materialien bestehen und die Zwischenlage 130 kann übereinstimmend zu der Decklage und Trägerlage ausgebildet sein oder aus einem hiervon verschiedenen Material bestehen.

Die Decklage und die Trägerlage sind mittels einer Vernadelung oder Vernähung oder Verwirken miteinander verbunden, hierzu sind mehrere Vernadelungen 140a, b, c in die Geomaterialbahn eingebracht, welche die Decklage mit der Trägerlage durch die Zwischenlage 130 hindurch verbinden. Bei dieser Ausgestaltung einer Geomaterialbahn kann beispielsweise die Decklage aus einem Material bestehen, welches biologisch schneller abgebaut wird als die Trägerlage 120. Hierdurch entstehen nach einem teilweisen oder vollständigen biologischen Abbau der Vernadelungs- oder Vernähungs- oder Verwirkungsanteile der Geomaterialbahn Kanäle, die sich von der Oberseite zur Unterseite der Geomaterialbahn erstrecken und beispielsweise Raum für Durchwurzelungen oder Drainageeffekte bieten.

Fig. 4 zeigt eine zweite Ausführungsform einer Geomaterialbahn, die eine obere Gitterlage 210 und eine darunterliegende Vlieslage 220 aufweist. Die Gitterlage 210 ist durch ein kreuzweise gebildetes Gitter aus starken Einzelfasern oder -stäben gebildet, die Gitteröffnungen von einer bestimmten Größe, beispielsweise 10 x 10 mm bis 40 x 40 mm, ausbilden. Die Vlieslage ist aus dichten, zufällig orientierten Fasern eines unterschiedlichen Materials zu der Lage 210 ausgebildet. Diese Vlieslage bewirkt insgesamt einen Verschluss der Öffnungen der Gitterlage 210, sodass sich eine insgesamt für gröbere Partikel undurchlässige Geomaterialbahn ergibt, die eine Durchlässigkeit für Flüssigkeiten und Gase aufweist. Die Vlieslage 220 ist aus einem Material wie beispielsweise Lyocell aufgebaut und baut sich biologisch schneller ab als die Gitterlage 210. Hierdurch reduziert sich die mechanische Festigkeit der Geomaterialbahn innerhalb der kurzen biologischen Abbauzeit der Vlieslage 220 und die Geomaterialbahn reduziert sich nach Abbau der Vlieslage 220 auf die verbleibende Gitterlage 210 mit den darin ausgebildeten Öffnungen, die wiederum für eine günstige Durchwurzelung entsprechenden Raum bereitstellen.

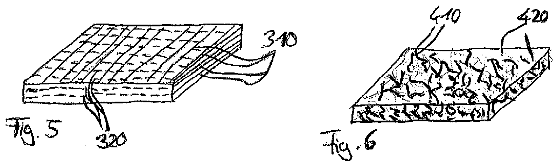

Fig. 5 zeigt eine dritte Ausführungsform, welche grundsätzlich als einschichtige Geomaterialbahn ausgebildet ist. In der Geomaterialbahn sind in einer ersten Richtung Fasern 310 eines ersten Materials angeordnet und in einer zweiten, quer zur ersten Richtung liegenden Richtung Fasern 320 angeordnet und bilden hierdurch jeweils Faserlagen. Die Fasern 310 und 320 können miteinander verbunden sein, beispielsweise durch Verschweißung, Verklebung, durch Verschlaufung, Vernadelung, Webtechniken oder Wirktechniken und/oder mittels einer Deck- und Trägerlage ober und unterhalb der Fasern 310 und 320. Die Fasern 310 sind aus einem unterschiedlichen Material als die Fasern 320, wobei das Material, aus dem die Fasern 320 ausgebildet sind, schneller biologisch abgebaut wird als das Material, aus dem die Fasern 310 ausgebildet sind. Durch dieses biologische Abbauverhalten der Geomaterialbahn weist die Geomaterialbahn initial eine Belastbarkeit in Längs- und Querrichtung auf, entsprechend dem Verlauf der Fasern 310, 320. Mit zunehmendem biologischen Abbau der Fasern 320 nimmt die Festigkeit und Belastbarkeit in der Längsrichtung entlang dem Verlauf der Fasern 320 ab, sodass sich ein anisotropes mechanisches Belastungsverhalten der Geomaterialbahn ergibt.

Fig. 6 zeigt eine vierte Ausführungsform, bei der zwei unterschiedliche Materialien zu einer Vlieslage verarbeitet sind, welche eine Geomaterialbahn darstellt oder eine Schichtlage einer Geomaterialbahn darstellen kann. Die zwei unterschiedlichen Materialien 410, 420 sind unorientiert als Kurz- oder Langfasern oder Endlosfasern zu einem Vlies verarbeitet und miteinander verbunden. Das Material 420 baut sich biologisch schneller ab als das Material 410, wodurch die Dichte der Geomaterialbahn mit zunehmendem biologischen Abbau in der Einbausituation abnimmt und die Geomaterialbahn durchlässiger wird und/oder seine mechanischen Eigenschaften verändert.

Grundsätzlich ist zu verstehen, dass die vier Ausführungsbeispiele auch miteinander kombiniert werden können, indem mehrschichtige Geomaterialbahnen daraus hergestellt werden, die kombinierte Eigenschaften dieser Ausführungsbeispiele aufweisen. Weiterhin ist zu verstehen, dass die Kombination der vier Ausführungsbeispiele auch solcherart erfolgen kann, dass deren Eigenschaften in einer einzigen Schichtlage einer Geomaterialbahn vereint werden, beispielsweise, indem die Gitterstruktur 210 der zweiten Ausführungsform mit den anisotrop sich biologisch abbauenden Fasern 310, 320 der dritten Ausführungsform ausgebildet wird.

Das biologische Abbauverhalten kann grundsätzlich am Einbauort und angepasst auf die dort herrschenden Bedingungen eingestellt werden. So kann bei allen Ausführungsformen in Anpassung an die biologischen Abbaueigenschaften der Anteil des einen Materials im Verhältnis zum Anteil des anderen Materials erhöht oder verringert werden, um ein gewünschtes biologisches Abbauverhalten in Anpassung an die herrschenden Bedingungen zu erhalten. Weiterhin können die biologischen Abbaueigenschaften durch äußere Einflüsse wie UV-Strahlung und/oder Sauerstoffgehalt und/oder Konzentration von Bakterien, Pilzen oder chemischen Einflüssen der Umgebung beeinflusst oder sogar erst ausgelöst werden, wodurch sich ein spezifisches Verhalten der Geomaterialbahnen hinsichtlich des biologischen Abbaus ergibt, wenn diese von einem Ort an einen anderen Ort verbracht werden, an dem sich diese spezifischen Umgebungsbedingungen ändern.

## Patentansprüche

1. Verfahren zur ortsabhängigen Bodenstabilisierung mittels einer Geomaterialbahn, mit den Schritten:
Auslegung des Produktes auf die die Dauerhaftigkeit des Geomaterials bestimmenden Einflussparameter am Einbauort, wobei die Einflussparameter ausgewählt sind aus:
- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
Bestimmen eines oder mehrerer dieser Einflussparameter an einem vom Einbauort beabstandeten Verbringort,
- Einbauen der Geomaterialbahn am Einbauort, wobei die Geomaterialbahn ein Strukturmaterial umfasst, das
∘ unter der Intensität des Einflussparameters am Verbringort eine biologische Abbaubarkeit in dem Maße aufweist, dass innerhalb von sechs Monaten ein Verbringortrestanteil in einem Sieb von 2mm Maschenweite verbleibt, wenn das Material bzw. seine Bestandteile gesiebt werden,
∘ wobei der Verbringortrestanteil kleiner als 80 Gew.-%, vorzugsweise kleiner als 25 Gew.-% oder kleiner als 10 Gew.% des Materials ist,
∘ unter der Intensität des Einflussparameters am Einbauort eine biologische Abbaubarkeit in dem Maße aufweist, dass innerhalb von sechs Monaten ein Einbauortrestanteil des Materials in einem Sieb von 2mm Maschenweite verbleibt, wenn das Material bzw. seine Bestandteile gesiebt werden,
∘ wobei der Einbauortrestanteil größer ist als der Verbringortrestanteil.
wobei vorzugsweise der Einbauort eine Umgebung aufweist, die eine gegenüber dem Verbringort niedrigere Temperatur, Strahlungseinwirkung, Sauerstoff-, Bakterien- und/oder Pilzkonzentration aufweist.

2. Verfahren nach Anspruch 1,
**dadurch gekennzeichnet, dass** der Einbauort am Meeresgrund liegt und die Geomaterialbahn in Meereswasser infolge einer Strömung und/oder Dichteunterschieden aufschwimmt oder verbracht wird.

3. Verfahren nach einem der Ansprüche 1-2,
**dadurch gekennzeichnet, dass** das Strukturmaterial ein Material auf Viscosebasis ist, insbesondere Lyocell.

4. Verfahren nach einem der vorhergehenden Ansprüche 1-3,
**dadurch gekennzeichnet, dass**
- die Geomaterialbahn eine Polymergruppe aufweist, die ein mit einer Isotopenmarkierung versehenes Molekül umfasst, insbesondere eine ¹³C oder ¹⁸O-Isotopenmarkierung, und/oder
- die Geomaterialbahn ein Strukturmaterial umfasst oder aus einem oder mehreren Strukturmaterialien besteht, das/die verstoffwechselbar ist/sind.

5. Verfahren nach einem der vorhergehenden Ansprüche 1-4,
**Dadurch gekennzeichnet, dass** die Geomaterialbahn durch einen ein- oder mehrschichtigen Filtervliesstoff gebildet wird, der aus mindestens zwei unterschiedlichen Strukturmaterialen hergestellt ist, die zu einem Vliesstoff miteinander verbunden sind, wobei
- ein erstes Strukturmaterial unter einer vorbestimmten Intensität eines Einflussparameters an einem Einbauort eine biologische Abbaubarkeit in dem Maße aufweist, dass innerhalb von sechs Monaten im wässrigen Medium ein Gewichtsprozentanteil von mehr als 50%, insbesondere mehr als 75% des Strukturmaterials in Kohlendioxid umgewandelt ist,
wobei die vorbestimmte Intensität des Einflussparameters ausgewählt ist aus:
- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- und ein zweites Strukturmaterial mit dem ersten Strukturmaterial zu dem Filtervliesstoff verbunden ist, wobei das zweite Strukturmaterial unter der gleichen vorbestimmten Intensität des Einflussparameters an dem gleichen Einbauort eine biologische Abbaubarkeit in dem Maße aufweist, dass
- in einem Kompostierungstest mit folgenden Parametern:
∘ Proben mit einer Länge von 10cm, einer Breite von 10cm und einer Originalmaterialdicke,
∘ 50°C +/- 5°C,
∘ thermophile Bedingungen gemäß ISO 16929,
∘ Aussiebung der Feststoffe nach sechs Monaten in einem Sieb mit 2mm aschenweite (Mesh 8,75)
- bei der Siebung weniger als 50 Trocken-Gew.-% des Ausgangsmaterial im Sieb verbleibt, oder
- in einem marinen Inkubationstest, mit folgenden Parametern:
∘ Proben mit einer Länge von 2cm, einer Breite von 2cm und einer Originalmaterialdicke,
∘ 30°C +/- 2°C,
∘ aerobe Bedingungen in Meerwasser mit einem Salzgehalt von 3,5 Gew.- % +/- 1Gew.-%,
∘ Aussiebung der Feststoffe nach 4, 8 und 12 Wochen in einem Sieb mit 2mm Maschenweite (Mesh 8,75)
bei der Siebung nach 12 Wochen weniger als 20 Trocken-Gew.-% des Ausgangsmaterial im Sieb verbleibt.

6. Verfahren nach einem der vorhergehenden Ansprüche1-5,
**dadurch gekennzeichnet, dass** die Geomaterialbahn als Element in Konstruktionen, die der Beeinflussung von Luftströmungen dienen, so eingebaut wird, dass insbesondere die Geschwindigkeit der Luftströmung lokal verringert wird zum Zwecke der Ablagerung von Partikeln, die bei nicht verringerter Luftgeschwindigkeit in der Luft schwebend transportiert werden, springen oder rollen.

7. Verwendung einer Geomaterialbahn, die ein Strukturmaterial umfasst, das
- unter einer ersten Intensität eines Einflussparameters an einem Einbauort eine biologische Abbaubarkeit in dem Maße aufweist, dass
- In einem Kompostierungstest mit folgenden Parametern:
∘ Proben mit einer Länge von 10cm, einer Breite von 10cm und einer Originalmaterialdicke,
∘ 50°C +/- 5°C,
∘ thermophile Bedingungen gemäß ISO 16929, sofern diese nicht durch spezifische Intensitäten von spezifischen Einflussparametern am Einbauort definiert sind,
∘ Aussiebung der Feststoffe nach sechs Monaten in einem Sieb mit 2mm Maschenweite (Mesh 8,75)
- bei der Siebung mehr als 80 Trocken-Gew.-%, 25 Trocken-Gew.-%, 10 Trocken-Gew.-%des Ausgangsmaterial im Sieb verbleibt, oder dass
- in einem marinen Inkubationstest, mit folgenden Parametern:
∘ Proben mit einer Länge von 2cm, einer Breite von 2cm und einer Originalmaterialdicke,
∘ 30°C +/- 2°C,
∘ Aerobe Bedingungen in Meerwasser mit einem Salzgehalt von 3,5 Gew.- % +/- 1Gew.-%, sofern diese nicht durch spezifische Intensitäten von spezifischen Einflussparametern am Einbauort definiert sind,
∘ Aussiebung der Feststoffe nach 4, 8 und 12 Wochen in einem Sieb mit 2mm Maschenweite (Mesh 8,75)
- bei der Siebung nach 12 Wochen mehr als 80 Trocken-Gew.-%, mehr als 25 Trocken-Gew.-%, 10 Trocken-Gew.-% des Ausgangsmaterial im Sieb verbleibt, und
- unter einer zweiten Intensität des Einflussparameters an einem Verbringort eine biologische Abbaubarkeit in dem Maße aufweist, dass innerhalb von sechs Monaten in dem Kompostierungstest bzw. zwölf Wochen in dem marinen Inkubationstest weniger als 80 Gew.-%, insbesondere weniger als 25 Gew.-% oder weniger als 10 Gew.- % der Trockenmasse des ersten Strukturmaterials nach einer Siebung durch ein Sieb mit 2mm Maschenweite im Sieb verbleibt,
wobei die Intensität des Einflussparameters ausgewählt ist aus:
- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- Erwarteten mechanischen Beanspruchungen.
in solcher Weise, dass die Geomaterialbahn zu einem Einbauzeitpunkt am Einbauort eingebaut wird und zu einem dem Einbauzeitpunkt folgenden späteren Zeitpunkt an den Verbringort transportiert wird.

8. Verwendung einer Geomaterialbahn nach Anspruch 7 zum Einbau in eine Bodenschicht zum Zwecke der Bodenstabilisierung.

9. Verwendung nach einem der vorhergehenden Ansprüche 7-8,
**dadurch gekennzeichnet, dass**
- die Geomaterialbahn eine Polymergruppe aufweist, die ein mit einer Isotopenmarkierung versehenes Molekül umfasst, insbesondere eine ¹³C oder ¹⁸O-Isotopenmarkierung, und/oder
- die Geomaterialbahn ein Strukturmaterial umfasst oder aus einem oder mehreren Strukturmaterialien besteht, das/die verstoffwechselbar ist/sind.

10. Verwendung nach einem der vorhergehenden Ansprüche 7-9,
**Dadurch gekennzeichnet, dass** die Geomaterialbahn durch einen ein- oder mehrschichtigen Filtervliesstoff gebildet wird, der aus mindestens zwei unterschiedlichen Strukturmaterialen hergestellt ist, die zu einem Vliesstoff miteinander verbunden sind, wobei
- ein erstes Strukturmaterial unter einer vorbestimmten Intensität eines Einflussparameters an einem Einbauort eine biologische Abbaubarkeit in dem Maße aufweist, dass innerhalb von sechs Monaten im wässrigen Medium ein Gewichtsprozentanteil von mehr als 50%, insbesondere mehr als 75% des Strukturmaterials in Kohlendioxid umgewandelt ist,
wobei die vorbestimmte Intensität des Einflussparameters ausgewählt ist aus:
- Intensität einer Strahlungseinwirkung einer elektromagnetischen Strahlung,
- Höhe einer Temperatur,
- Konzentration eines chemisch und/oder biochemisch mit der Geomaterialbahn reagierenden Stoffes,
- Konzentration einer Konzentration an Bakterien,
- Konzentration von Pilzen,
- und ein zweites Strukturmaterial mit dem ersten Strukturmaterial zu dem Filtervliesstoff verbunden ist, wobei das zweite Strukturmaterial unter der gleichen vorbestimmten Intensität des Einflussparameters an dem gleichen Einbauort eine biologische Abbaubarkeit in dem Maße aufweist, dass
- In einem Kompostierungstest mit folgenden Parametern:
∘ Proben mit einer Länge von 10cm, einer Breite von 10cm und einer Originalmaterialdicke,
∘ 50°C +/- 5°C,
∘ thermophile Bedingungen gemäß ISO 16929,
∘ Aussiebung der Feststoffe nach sechs Monaten in einem Sieb mit 2mm aschenweite (Mesh 8,75)
- bei der Siebung weniger als 50 Trocken-Gew.-% des Ausgangsmaterial im Sieb verbleibt, oder
- in einem marinen Inkubationstest, mit folgenden Parametern:
∘ Proben mit einer Länge von 2cm, einer Breite von 2cm und einer Originalmaterialdicke
∘ 30°C +/- 2°C
∘ Aerobe Bedingungen in Meerwasser mit einem Salzgehalt von 3,5 Gew.- % +/- 1Gew.-%
∘ Aussiebung der Feststoffe nach 4, 8 und 12 Wochen in einem Sieb mit 2mm Maschenweite (Mesh 8,75)
bei der Siebung nach 12 Wochen weniger als 20 Trocken-Gew.-% des Ausgangsmaterial im Sieb verbleibt.

11. Verwendung nach einem der vorhergehenden Ansprüche7-10,
**dadurch gekennzeichnet, dass** die Geomaterialbahn als Element in Konstruktionen, die der Beeinflussung von Luftströmungen dienen, so eingebaut wird, dass insbesondere die Geschwindigkeit der Luftströmung lokal verringert wird zum Zwecke der Ablagerung von Partikeln, die bei nicht verringerter Luftgeschwindigkeit in der Luft schwebend transportiert werden, springen oder rollen.

## Claims

1. Method for location-dependent soil stabilization by means of a geomaterial web, comprising the steps:
Configuring a product for influencing parameters determining the durability of the geomaterial at the installation site, whereby the influencing parameters are selected from:
- an intensity of a radiation effect of an electromagnetic radiation,
- a height of a temperature,
- a concentration of a substance that reacts chemically and/or biochemically with the geomaterial web,
- a concentration of a concentration of bacteria,
- a concentration of fungi,
determining one or more of these influencing parameters at a transfer site at a distance from the installation site,
- installing the geomaterial web at the installation site, wherein the geomaterial web comprises a structural material which
∘ shows biodegradability under the intensity of the influencing parameter at the transfer site to the extent that a transfer site residual portion remains in a sieve with a mesh size of 2 mm within six months if the material or its components are sieved,
∘ wherein the transfer site residual portion is less than 80 wt.%, preferably less than 25 wt.% or less than 10 wt.% of the material,
∘ exhibits biodegradability at the installation site under the intensity of the influencing parameter to the extent that an installation site residual portion of the material remains in a sieve with a mesh size of 2 mm within six months if the material or its components are sieved,
∘ where the installation site residual portion is greater than the transfer site residual portion.
wherein preferably the installation site has an environment with a lower temperature, radiation, oxygen, bacteria and/or fungi concentration than the place of transfer.

2. Method according to claim 1,
**characterized in that** the installation site is on the seabed and the geomaterial web floats or is moved in seawater as a result of a current and/or density differences.

3. The method according to any one of claims 1-2,
**characterized in that** the structural material is a viscose-based material, in particular lyocell.

4. Method according to any of the preceding claims 1-3,
**characterized in that**
- the geomaterial web has a polymer group comprising a molecule provided with an isotopic label, in particular a ¹³C or ¹⁸O isotopic label, and/or
- the geomaterial web comprises a structural material or consists of one or more structural materials that are metabolizable.

5. Method according to any of the preceding claims 1-4,
**characterized in that** the geomaterial web is formed by a single-layer or multi-layer filter nonwoven which is produced from at least two different structural materials which are bonded together to form a nonwoven fabric, wherein
- a first structural material exhibits biodegradability under a predetermined intensity of an influencing parameter at an installation site to the extent that a percentage by weight of more than 50%, in particular more than 75%, of the structural material is converted into carbon dioxide in the aqueous medium within six months,
where the predetermined intensity of the influencing parameter is selected from:
- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- and a second structural material is bonded to the first structural material to form the nonwoven filter fabric, the second structural material exhibiting biodegradability under the same predetermined intensity of the influencing parameter at the same installation site to the extent that
- in a composting test with the following parameters:
∘ Samples with a length of 10 cm, a width of 10 cm and an original material thickness
∘ 50°C +/- 5°C
∘ thermophilic conditions according to ISO 16929,
∘ Sieving out the solids after six months in a sieve with an ash width of 2 mm (mesh 8.75)
- less than 50 % by dry weight of the starting material remains in the sieve during sieving,
or
- in a marine incubation test, with the following parameters:
∘ Samples with a length of 2 cm, a width of 2 cm and an original material thickness
∘ 30°C +/- 2°C
∘ aerobic conditions in seawater with a salt content of 3.5 wt.% +/- 1 wt.%,
∘ Sieving out the solids after 4, 8 and 12 weeks in a sieve with a mesh size of 2 mm (mesh 8.75)
less than 20 % by dry weight of the starting material remains in the sieve after 12 weeks.

6. Method according to any one of the preceding claims 1-5,
**characterized in that** the geomaterial web is installed as an element in structures which serve to influence air flows in such a way that, in particular, the speed of the air flow is reduced locally for the purpose of depositing particles which are transported suspended in the air, bouncing or rolling when the air speed is not reduced.

7. Use of a geomaterial web comprising a structural material which
- exhibits biodegradability under a first intensity of an influencing parameter at an installation site to the extent that
- In a composting test with the following parameters:
∘ Samples with a length of 10 cm, a width of 10 cm and an original material thickness
∘ 50°C +/- 5°C
∘ thermophilic conditions according to ISO 16929, unless these are defined by specific intensities of specific influencing parameters at the installation site,
∘ Sieving out the solids after six months in a sieve with a mesh size of 2 mm (mesh 8.75)
- more than 80 % by dry weight, 25 % by dry weight, 10 % by dry weight of the starting material remains in the sieve during sieving, or that
- in a marine incubation test, with the following parameters:
∘ Samples with a length of 2 cm, a width of 2 cm and an original material thickness
∘ 30°C +/- 2°C
∘ Aerobic conditions in seawater with a salt content of 3.5 wt.% +/- 1 wt.%, unless these are defined by specific intensities of specific influencing parameters at the installation site,
∘ Sieving out the solids after 4, 8 and 12 weeks in a sieve with a mesh size of 2 mm (mesh 8.75)
- more than 80 % by dry weight, more than 25 % by dry weight, 10 % by dry weight of the starting material remains in the sieve after 12 weeks, and
- under a second intensity of the influencing parameter at a transfer site, exhibits biodegradability to the extent that within six months in the composting test or twelve weeks in the marine incubation test less than 80 % by weight, in particular less than 25 % by weight or less than 10 % by weight of the dry mass of the first structural material remains in the sieve after sieving through a sieve with a mesh size of 2 mm,
where the intensity of the influencing parameter is selected from:
- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- Expected mechanical stresses.
in such a way that the geomaterial web is installed at the installation site at one time and transferred to the transfer site at a later time following the installation time.

8. Use of a geomaterial web according to claim 7 for installation in a soil layer for the purpose of soil stabilization.

9. Use according to any of the preceding claims 7-8,
**characterized in that**
- the geomaterial web has a polymer group comprising a molecule provided with an isotopic label, in particular a ¹³C or ¹⁸O isotopic label, and/or
- the geomaterial web comprises a structural material or consists of one or more structural materials that are metabolizable.

10. Use according to any of the preceding claims 7-9,
**characterized in that** the geomaterial web is formed by a single-layer or multi-layer filter nonwoven which is produced from at least two different structural materials which are bonded together to form a nonwoven, wherein
- a first structural material exhibits biodegradability under a predetermined intensity of an influencing parameter at an installation site to the extent that a percentage by weight of more than 50%, in particular more than 75%, of the structural material is converted into carbon dioxide in the aqueous medium within six months,
where the predetermined intensity of the influencing parameter is selected from:
- Intensity of a radiation effect of electromagnetic radiation,
- Height of a temperature,
- Concentration of a substance that reacts chemically and/or biochemically with the geomaterial web,
- Concentration of a concentration of bacteria,
- Concentration of fungi,
- and a second structural material is bonded to the first structural material to form the nonwoven filter fabric, the second structural material exhibiting biodegradability under the same predetermined intensity of the influencing parameter at the same installation site to the extent that
- In a composting test with the following parameters:
∘ Samples with a length of 10 cm, a width of 10 cm and an original material thickness
∘ 50°C +/- 5°C
∘ thermophilic conditions according to ISO 16929,
∘ Sieving out the solids after six months in a sieve with an ash width of 2 mm (mesh 8.75)
- less than 50 % by dry weight of the starting material remains in the sieve during sieving, or
- in a marine incubation test, with the following parameters:
∘ Samples with a length of 2cm, a width of 2cm and an original material thickness
∘ 30°C +/- 2°C
∘ Aerobic conditions in seawater with a salt content of 3.5 wt.% +/- 1 wt.%
∘ Sieving out the solids after 4, 8 and 12 weeks in a sieve with a mesh size of 2 mm (mesh 8.75)
less than 20 % by dry weight of the starting material remains in the sieve after 12 weeks.

11. Use according to any of the preceding claims 7-10,
**characterized in that** the geomaterial web is installed as an element in structures which serve to influence air flows in such a way that, in particular, the speed of the air flow is reduced locally for the purpose of depositing particles which are transported suspended in the air, bounce or roll when the air speed is not reduced.

## Revendications

1. Procédé pour la stabilisation des sols en fonction du lieu au moyen d'une bande de matériau géologique, avec les étapes :
d'adaptation du produit aux paramètres d'influence déterminant la durabilité du matériau géologique sur le lieu d'installation, dans lequel les paramètres d'influence sont sélectionnés parmi :
- l'intensité d'un effet de rayonnement d'un rayonnement électromagnétique,
- la valeur d'une température,
- la concentration d'une substance réagissant chimiquement et/ou biochimiquement avec la bande de matériau géologique,
- la concentration d'une concentration de bactéries,
- la concentration de champignons,
de détermination d'un ou plusieurs de ces paramètres d'influence sur un lieu de transfert distant du lieu d'installation,
- l'installation de la bande de matériau géologique sur le lieu d'installation, dans lequel la bande de matériau géologique comprend un matériau structural, qui
∘ à l'intensité du paramètre d'influence sur le lieu de transfert présente une biodégradabilité telle qu'en six mois une fraction résiduelle au lieu de transfert reste dans un tamis de 2 mm d'ouverture de maille, lorsque le matériau ou ses constituants sont tamisés,
∘ dans lequel la fraction résiduelle au lieu de transfert est inférieure à 80 % en poids, de préférence inférieure à 25 % en poids ou inférieure à 10 % en poids du matériau,
∘ à l'intensité du paramètre d'influence sur le lieu d'installation présente une biodégradabilité telle qu'en six mois une fraction résiduelle au lieu d'installation du matériau reste dans un tamis de 2 mm d'ouverture de maille, lorsque le matériau ou ses constituants sont tamisés,
∘ dans lequel la fraction résiduelle au lieu d'installation est supérieure à la fraction résiduelle au lieu de transfert.
dans lequel de préférence le lieu d'installation présente un environnement qui présente une température, un effet de rayonnement, une concentration en oxygène, en bactéries et/ou en champignons plus faible par rapport au lieu de transfert.

2. Procédé selon la revendication 1,
**caractérisé en ce que** le lieu d'installation se situe sur le fond marin et la bande de matériau géologique flotte ou passe dans l'eau de mer en raison d'un courant et/ou de différences de pression.

3. Procédé selon l'une quelconque des revendications 1-2,
**caractérisé en ce que** le matériau structural est un matériau à base de viscose, en particulier du lyocell.

4. Procédé selon l'une des revendications précédentes 1-3,
**caractérisé en ce que**
- la bande de matériau géologique présente un groupe polymère, qui comprend une molécule pourvue d'un marquage isotopique, en particulier un marquage isotopique ¹³C ou ¹⁸O, et/ou
- la bande de matériau géologique comprend un matériau structural ou est constituée d'un ou plusieurs matériaux structuraux, qui est/sont métabolisables.

5. Procédé selon l'une des revendications précédentes 1-4,
**caractérisé en ce que** la bande de matériau géologique est formée par un non-tissé filtrant monocouche ou multicouche, qui est fabriqué à partir d'au moins deux différents matériaux structuraux, qui sont reliés l'un à l'autre en un non-tissé, dans lequel
- un premier matériau structural à une intensité prédéfinie d'un paramètre d'influence sur un lieu d'installation présente une biodégradabilité telle qu'en six mois dans le milieu aqueux un pourcentage en poids supérieur à 50 %, en particulier supérieur à 75 % du matériau structural, est converti en dioxyde de carbone,
dans lequel l'intensité prédéfinie du paramètre d'influence est sélectionnée parmi :
-- l'intensité d'un effet de rayonnement d'un rayonnement électromagnétique,
-- la valeur d'une température,
-- la concentration d'une substance réagissant chimiquement et/ou biochimiquement avec la bande de matériau géologique,
-- la concentration d'une concentration de bactéries,
-- la concentration de champignons,
- et un deuxième matériau structural est relié au premier matériau structural en le non-tissé filtrant, dans lequel le deuxième matériau structural présente, à la même intensité prédéfinie du paramètre d'influence sur le même lieu d'installation, une biodégradabilité telle que
- dans un test de compostage avec les paramètres suivants :
∘ échantillons avec une longueur de 10 cm, une largeur de 10 cm et une épaisseur de matériau original,
∘ 50 °C ± 5 °C,
∘ conditions thermophiles selon ISO 16929,
∘ tamisage des matières solides six mois après dans un tamis avec une ouverture de maille de 2 mm (mesh 8,75)
- lors du tamisage moins de 50 % en poids sec du matériau de départ reste dans le tamis, ou
- dans un test d'incubation marin, avec les paramètres suivants :
∘ échantillons avec une longueur de 2 cm, une largeur de 2 cm et une épaisseur de matériau original,
∘ 30 °C ± 2 °C,
∘ conditions aérobies dans l'eau de mer avec une teneur en sel de 3,5 % en poids +/- 1 % en poids,
∘ tamisage des matières solides 4, 8 et 12 semaines après dans un tamis avec 2 mm d'ouverture de maille (mesh 8,75)
lors du tamisage, 12 semaines après, moins de 20 % en poids sec du matériau de départ reste dans le tamis.

6. Procédé selon l'une des revendications précédentes 1-5,
**caractérisé en ce que** la bande de matériau géologique est installée en tant qu'élément dans des structures qui servent à influencer des courants d'air, qu'en particulier la vitesse du courant d'air est réduite localement aux fins de dépôt de particules, qui sont transportées en suspension dans l'air, sautent ou roulent lorsque la vitesse de l'air n'est pas réduite.

7. Utilisation d'une bande de matériau géologique, qui comprend un matériau structural, qui
- présente, à une première intensité d'un paramètre d'influence sur un lieu d'installation, une biodégradabilité telle que
- dans un test de compostage avec les paramètres suivants :
∘ échantillons avec une longueur de 10 cm, une largeur de 10 cm et une épaisseur de matériau original,
∘ 50 °C ± 5 °C,
∘ conditions thermophiles selon ISO 16929, dans la mesure où celles-ci ne sont pas définies par des intensités spécifiques de paramètres d'influence spécifiques sur le lieu d'installation,
∘ tamisage des matières solides six mois après dans un tamis avec 2 mm d'ouverture de maille (mesh 8,75)
- lors du tamisage plus de 80 % en poids sec, 25 % en poids sec, 10 % en poids sec du matériau de départ reste dans le tamis, ou que
- dans un test d'incubation marin, avec les paramètres suivants :
∘ échantillons avec une longueur de 2 cm, une largeur de 2 cm et une épaisseur de matériau original,
∘ 30 °C ± 2 °C,
∘ conditions aérobie dans l'eau de mer avec une teneur en sel de 3,5 % en poids +/- 1 % en poids, dans la mesure où celles-ci ne sont pas définies par des intensités spécifiques de paramètres d'influence spécifiques sur le lieu d'installation,
∘ tamisage des matières solides, 4, 8 et 12 semaines après, dans un tamis avec 2 mm d'ouverture de maille (mesh 8,75)
- lors du tamisage 12 semaines après, plus de 80 % en poids sec, plus de 25 % en poids sec, 10 % en poids sec du matériau de départ reste dans le tamis, et
- à une deuxième intensité du paramètre d'influence sur un lieu de transfert présente une biodégradabilité telle qu'en six mois dans le test de compostage ou douze semaines dans le test d'incubation marin moins de 80 % en poids, en particulier moins de 25 % en poids ou moins de 10 % en poids de la matière sèche du premier matériau structural reste après un tamisage à travers un tamis avec 2 mm d'ouverture de maille dans le tamis,
dans laquelle l'intensité du paramètre d'influence est sélectionnée parmi :
- l'intensité d'un effet de rayonnement d'un rayonnement électromagnétique,
- la valeur d'une température,
- la concentration d'une substance réagissant chimiquement et/ou biochimiquement avec la bande de matériau géologique,
- la concentration d'une concentration de bactéries,
- la concentration de champignons,
- des contraintes mécaniques attendues.
de telle sorte que la bande de matériau géologique est installée à un moment d'installation sur le lieu d'installation et est transportée sur le lieu de transfert à un moment ultérieur succédant au moment d'installation.

8. Utilisation d'une bande de matériau géologique selon la revendication 7 à installer dans une couche de sol aux fins de la stabilisation des sols.

9. Utilisation selon l'une des revendications précédentes 7-8,
**caractérisée en ce que**
- la bande de matériau géologique présente un groupe polymère, qui comprend une molécule pourvue d'un marquage isotopique, en particulier un marquage isotopique ¹³C ou ¹⁸O, et/ou
- la bande de matériau géologique comprend un matériau structural ou est constituée d'un ou plusieurs matériaux structuraux, qui est/sont métabolisables.

10. Utilisation selon l'une des revendications précédentes 7-9,
**caractérisée en ce que** la bande de matériau géologique est formée par un non-tissé filtrant monocouche ou multicouche, qui est obtenu à partir d'au moins deux différents matériaux structuraux, qui sont reliés l'un à l'autre en un non-tissé, dans lequel
- un premier matériau structural, à une intensité prédéfinie d'un paramètre d'influence sur un lieu d'installation, présente une biodégradabilité telle qu'en six mois dans le milieu aqueux un pourcentage en poids supérieur à 50 %, en particulier supérieur à 75 % du matériau structural est converti en dioxyde de carbone,
dans laquelle l'intensité prédéfinie du paramètre d'influence est sélectionnée parmi :
-- l'intensité d'un effet de rayonnement d'un rayonnement électromagnétique,
-- la valeur d'une température,
-- la concentration d'une substance réagissant chimiquement et/ou biochimiquement avec la bande de matériau géologique,
-- la concentration d'une concentration de bactéries,
-- la concentration de champignons,
- et un deuxième matériau structural est relié au premier matériau structural en le non-tissé filtrant, dans laquelle le deuxième matériau structural présente, à la même intensité prédéfinie du paramètre d'influence sur le même lieu d'installation, une biodégradabilité telle que
- dans un test de compostage avec les paramètres suivants :
∘ échantillons avec une longueur de 10 cm, une largeur de 10 cm et une épaisseur de matériau original,
∘ 50 °C ± 5 °C,
∘ conditions thermophiles selon ISO 16929,
∘ tamisage des matières solides six mois après dans un tamis avec une ouverture de maille de 2 mm (mesh 8,75)
- lors du tamisage moins de 50 % en poids sec du matériau de départ reste dans le tamis, ou
- dans un test d'incubation marin, avec les paramètres suivants :
∘ échantillons avec une longueur de 2 cm, une largeur de 2 cm et une épaisseur de matériau original,
∘ 30 °C ± 2 °C,
∘ conditions aérobies dans l'eau de mer avec une teneur en sel de 3,5 % en poids +/- 1 % en poids,
∘ tamisage des matières solides 4, 8 et 12 semaines après dans un tamis avec 2 mm d'ouverture de maille (mesh 8,75)
lors du tamisage, 12 semaines après, moins de 20 % en poids sec du matériau de départ reste dans le tamis.

11. Utilisation selon l'une des revendications précédentes 7-10,
**caractérisée en ce que** la bande de matériau géologique est installée en tant qu'élément dans des structures qui servent à influencer les courants d'air, qu'en particulier la vitesse du courant d'air est réduite localement aux fins de dépôt de particules, qui sont transportées en suspension dans l'air, sautent ou roulent lorsque la vitesse de l'air n'est pas réduite.
